# EUROPEAN PATENT SPECIFICATION

(11) **EP 4 625 636 B1**
(45) Date of publication and mention of the grant of the patent: **01.04.2026**
(21) Application number: 25166774.7
(22) Date of filing: 27.03.2025
(51) Int. Cl.: H01M 50/176, H01M 50/188

(54) **END COVER ASSEMBLY, ENERGY-STORAGE APPARATUS, AND ELECTRICITY-CONSUMPTION DEVICE**
ENDKAPPENANORDNUNG, ENERGIESPEICHERVORRICHTUNG UND ELEKTRIZITÄTSVERBRAUCHSVORRICHTUNG
ENSEMBLE COUVERCLE D'EXTRÉMITÉ, APPAREIL DE STOCKAGE D'ÉNERGIE ET DISPOSITIF DE CONSOMMATION D'ÉLECTRICITÉ

(30) Priority: 27.03.2024 CN 202410361424
(43) Date of publication of application: 01.10.2025
(73) Proprietor: Xiamen Hithium Energy Storage Technology Co., Ltd., Xiamen, Fujian 361100 (CN)
(72) Inventor: XIAO, Hepan, Xiamen, Fujian 361100 (CN); TAN, Jiben, Xiamen, Fujian 361100 (CN); XU, Weidong, Xiamen, Fujian 361100 (CN)
(74) Representative: Santarelli

(56) References cited:
- WO-A1-2021/218844
- WO-A1-2022/077904
- CN-A- 117 219 933
- US-A1- 2013 136 977

## Description

### TECHNICAL FIELD

This disclosure relates to the field of energy storage technology, and in particular to an end cover assembly, an energy-storage apparatus, and an electricity-consumption device.

### BACKGROUND

A secondary battery, also known as a rechargeable battery or a storage battery, refers to a battery that can continue to be used by activating active substance by means of charging after the battery is discharged. The recyclable characteristics of the secondary battery make it gradually become a main power source for an electricity-consumption device. With the gradual increase in the demand for the secondary battery, people have higher requirements for the reliability of the secondary battery.

In an existing secondary battery, after a terminal post is embedded into a lower plastic member by a pressing ring, the pressing ring will twist relative to an upper cover under the driving of the terminal post, and will squeeze and cut the lower plastic member.

US 2013/136977 A1 relates to a non-aqueous electrolyte secondary battery. The non-aqueous electrolyte secondary battery includes a container, an electrode assembly housed in the container, an electrode terminal provided at the container, and a current collector which electrically connects the electrode terminal and the electrode assembly. The container includes a wall having (i) an outer surface with a protrusion part formed to be protrude outward and (ii) an inner surface with a recess part formed corresponding in position to the protrusion part when the protrusion parts is formed, and the current collector includes a base part connected to the electrode terminal in the recess part and an arm part which extends from the base part in the direction opposite to the protrusion direction of the protrusion part, and is connected to the electrode assembly.

### SUMMARY

The invention is defined by the independent claim. An end cover assembly is provided in the present disclosure, and can prevent a lower plastic member from being cut.

The end cover assembly includes an upper cover, a lower plastic member, a first terminal-post, and a first pressing ring. The upper cover includes an upper-cover body and a first protrusion. The upper-cover body has a front face and a back face positioned facing away from the front face in a thickness direction of the upper-cover body. The first protrusion protrudes from the back face. The upper cover defines a first mounting recess and a first through-hole. The first mounting recess is recessed towards the upper-cover body from a surface of the first protrusion positioned facing away from the upper-cover body. The first through-hole extends through a recess bottom-wall of the first mounting recess and the front face. The lower plastic member includes a lower-plastic-member body. The lower-plastic-member body has a first surface and a second surface positioned facing away from the first surface in a thickness direction of the lower-plastic-member body. The lower plastic member defines a first accommodating recess. The first accommodating recess is recessed from the second surface towards the first surface. The lower plastic member is positioned at one side of the back face positioned facing away from the front face, and is stacked with and connected to the upper cover. At least a part of the first accommodating recess is positioned in the first mounting recess. The first terminal-post passes through the first through-hole. The first pressing ring is sleeved on the first terminal-post and fixedly connected to the first terminal-post. At least a part of the first pressing ring is positioned in the first accommodating recess and fixedly connected to a recess wall of the first accommodating recess. An orthographic projection of the first pressing ring on the lower plastic member covers an orthographic projection of the first protrusion on the lower plastic member, in a direction perpendicular to a thickness direction of the end cover assembly.

In embodiments of the present disclosure, the first protrusion is disposed on the upper cover, and the first protrusion surrounds the first mounting recess, so that the height of a recess sidewall of the first mounting recess is increased, thereby increasing the area of the recess sidewall of the first mounting recess. When the first pressing ring is accommodated in the first mounting recess, the overlapping area of the upper cover and the first pressing ring in the direction perpendicular to the thickness of the end cover assembly can be increased, so that the connection area of the first pressing ring and the upper cover can be increased. Therefore, the first pressing ring and the first terminal-post are not easy to rotate relative to the upper cover, which is beneficial to improving the torsional strength of the first terminal-post and preventing a part of the lower plastic member positioned between the first pressing ring and the upper-cover body from being cut.

In a possible implementation, the first protrusion has a first flat surface and a first inclined surface connected to the first flat surface. The first flat surface is connected to a recess sidewall of the first mounting recess. The first inclined surface is connected to the back face. The first inclined surface is inclined towards the first through-hole with respect to a thickness direction of the upper cover, in a direction from the front face to the back face. As such, in the process of stamping and blanking the upper cover to form the first protrusion, it is convenient to realize the material flow, and the first protrusion can be obtained by stamping the upper cover once. Therefore, machining is not necessary, and the machining procedure for the upper cover is reduced, thereby benefiting to improve the production efficiency of the upper cover and reduce the cost.

In a possible implementation, the first protrusion has a height *H₁* ranging from 0.05 mm to 0.3 mm in the thickness direction of the upper cover. As such, the first protrusion can be formed by one stamping without machining and cutting, which is beneficial to improving the production efficiency of the upper cover, reducing the cost, and avoiding workpiece burrs caused by machining.

In a possible implementation, the upper cover further includes a first reinforcing portion. The first reinforcing portion protrudes from the recess bottom-wall of the first mounting recess. The first reinforcing portion surrounds the first through-hole and is connected to a recess sidewall of the first mounting recess.

In embodiments of the present disclosure, in the process of upsetting the upper cover, since the thickness of the upper cover at the first mounting recess decreases, the cutting force exerted on the upper cover at the first mounting recess is large. In embodiments of the present disclosure, by providing the first reinforcing portion, the thickness of the upper cover at the first mounting recess is increased, so that the structural strength of the upper cover can be increased, and thus it is beneficial to ensure that the upper cover is not easily deformed during the upsetting process. In addition, in the length direction of the upper cover, the distance from the recess sidewall of the first mounting recess to the hole wall of the first through-hole can be reduced by providing the first reinforcing portion, and the force arm can be shortened. Therefore, the upper cover can bear a larger external force at the first mounting recess, which is beneficial to improving the structural strength of the upper cover.

In a possible implementation, the first reinforcing portion has a height *H₂* ranging from 0.1 mm to 0.5 mm in a thickness direction of the upper cover. As such, the structural design of the upper cover is more reasonable, and the strength of the upper cover is larger.

In a possible implementation, the first reinforcing portion has a third flat surface and a first step surface connected to the third flat surface. The third flat surface is positioned at one side of the first reinforcing portion positioned facing away from the recess bottom-wall of the first mounting recess. The third flat surface is connected to the recess sidewall of the first mounting recess. The first step surface is connected to the recess bottom-wall of the first mounting recess. A chamfer *R₁₁* is defined at a connection of the first step surface and the third flat surface. A chamfer *R₂₁* is defined at a connection of the first step surface and the recess bottom-wall of the first mounting recess. As such, in the process of upsetting the upper cover, it is convenient to realize the material flow, and a first mounting sub-recess can be defined by one stamping process without machining and cutting. Therefore, the machining procedure for the upper cover is reduced, which is beneficial to improving production efficiency and reducing cost.

In a possible implementation, each of the chamfer *R₁₁* and the chamfer *R₂₁* has a radius ranging from 0.05 mm to 3 mm.

In a possible implementation, the upper cover further includes a first boss protruding from the front face. The first through-hole further extends through the first boss. The first boss has a first peripheral side surface. In a direction from the back face to the front face, the first peripheral side surface is inclined towards the first through-hole with respect to a thickness direction of the upper cover.

In this implementation, by providing the first boss around the edge of the first through-hole, the height of the hole wall of the first through-hole is increased. Therefore, the connection area of the first terminal-post and the upper cover is increased, which is beneficial to preventing the first terminal-post from twisting relative to the upper cover, thereby reducing the cutting to the lower plastic member.

In a possible implementation, an angle between the first peripheral side surface and the thickness direction of the upper cover ranges from 5° to 60°. As such, in the process of forming the first boss on the upper cover by means of upsetting, it is convenient to realize the flow of the material to the first through-hole, thereby reducing the abrasion of the upper cover on the stamping tool, improving the service life of the tool and the product yield, and reducing the formation of metal wires.

In a possible implementation, at least a part of the first terminal-post is a polygonal prism. A shape of the first through-hole matches a shape of the first terminal-post. Compared to a design in which the first terminal-post is cylindrical, in the present disclosure, at least the part of the first terminal-post is set as a polygonal prism, and the shape of the first through-hole is also set as a shape corresponding to the shape of the first terminal-post. Therefore, when the first terminal-post is connected to the upper cover compatibly, the first terminal-post is not easy to rotate relative to the upper cover, and the torsional strength of the first terminal-post is improved, so that it is beneficial to prevent a part of the lower plastic member positioned between the first pressing ring and the upper-cover body from being cut.

In a possible implementation, the first terminal-post includes a first part and a second part. The second part is connected to a surface of the first part. The first part passes through the first through-hole. The first part is a hexagonal prism. The second part is connected to the first pressing ring compatibly. The first part can pass through the first through-hole and be connected to the upper cover compatibly, so as to obtain larger torsional strength. The second part can be connected to the first pressing ring compatibly.

In a possible implementation, the first part has a first top surface positioned facing towards the second part and connected to the second part. The first part further has a first face, a second face, a third face, a fourth face, a fifth face, and a sixth face connected in sequence. Each of the first face, the second face, the third face, the fourth face, the fifth face, and the sixth face is connected to the first top surface. The first face, the second face, the third face, the fourth face, the fifth face, and the sixth face are distributed symmetrically around a central axis of the first terminal-post. A chamfer *R₀₁* is defined at a connection of the first face and the second face. The chamfer *R₀₁* has a radius ranging from 0.5 mm to 5.0 mm. As such, in the manufacturing process of the first terminal-post, the abrasion of the tool can be reduced, the material flow is facilitated, and the manufacturing process yield of the first terminal-post is improved. In addition, the flow resistance of the material during stamping of the first terminal-post can be reduced, and a surface layer of the first part is not prone to breakage.

In a possible implementation, a chamfer *R₀₂* is defined at a connection of the first top surface and the first face. The chamfer *R₀₂* has a radius ranging from 0.1 mm to 1 mm. As such, the manufacturing process difficulty of the first terminal-post can be reduced, and the material flow in the manufacturing process of the first terminal-post can be facilitated.

In a possible implementation, the first face is inclined towards a center of the first terminal-post, in a direction from the first part to the second part. As such, in the manufacturing process of the first terminal-post, the abrasion of a tool can be reduced, and the material flow can also be facilitated, thereby improving the manufacturing process yield of the first terminal-post. In addition, the flow resistance of the material during stamping of the first terminal-post can be reduced, and a surface layer of the first part is not prone to breakage.

In a possible implementation, an angle of the first face with respect to a thickness direction of the upper cover ranges from 0.05° to 5°.

In a possible implementation, the lower plastic member further defines a first avoidance recess. The first avoidance recess is recessed from the first surface towards the second surface. The first avoidance recess is positioned facing towards the first protrusion.

In embodiments of the present disclosure, the first avoidance recess serves to avoid the first protrusion of the upper cover.

In a possible implementation, the first accommodating recess has a first snapped protrusion on the first surface. The lower plastic member further includes a first protrusion portion. The first protrusion portion protrudes from a surface of the first snapped protrusion positioned facing away from the first surface. The first mounting recess includes a first mounting sub-recess and a second mounting sub-recess that are arranged in a thickness direction of the upper cover and are in communication with each other. The first snapped protrusion is inserted into the first mounting sub-recess. The first protrusion portion is inserted into the second mounting sub-recess.

In the implementations of the present disclosure, the first snapped protrusion A can be snapped into the first mounting sub-recess to achieve mutual positioning, so that the first protrusion portion is snapped into the second mounting sub-recess to achieve mutual positioning. In the present disclosure, by improving the torsional strength of the first terminal-post, it is beneficial to prevent, the first protrusion portion, the first snapped protrusion A, and a part of the lower-plastic-member body that are positioned between the upper-cover body and the first pressing ring, from being cut.

An energy-storage apparatus is further provided in the present disclosure. The energy-storage apparatus includes a housing and the end cover assembly as described above. The end cover assembly is mounted to the housing to seal an opening of the housing.

An electricity-consumption device is further provided in the present disclosure. The electricity-consumption device includes the energy-storage apparatus as described above. The energy-storage apparatus is configured to store electrical energy.

### BRIEF DESCRIPTION OF THE DRAWINGS

In order to describe technical solutions in the present disclosure more clearly, the following will give a brief introduction to accompanying drawings required for describing the implementations. Apparently, the accompanying drawings hereinafter described merely illustrate some implementations of the present disclosure. Based on the accompanying drawings, those of ordinary skill in the art can also obtain other drawings without creative effort.
FIG. 1 is an application scenario view of an energy-storage apparatus provided in embodiments of the present disclosure.
FIG. 2 is a schematic perspective structural view of the energy-storage apparatus illustrated in FIG. 1.
FIG. 3 is a schematic structural view of an end cover assembly illustrated in FIG. 2.
FIG. 4 is an exploded schematic structural view illustrating part of the end cover assembly illustrated in FIG. 3.
FIG. 5 is an exploded schematic structural view illustrating part of the end cover assembly illustrated in FIG. 3, viewed from another direction.
FIG. 6 is a partial enlarged view of the end cover assembly at Circle M in FIG. 5.
FIG. 7 is a partial enlarged view of the end cover assembly at Circle N in FIG. 4.
FIG. 8A is a schematic structural view of a first terminal-post and a first flange illustrated in FIG. 4.
FIG. 8B is a schematic structural view illustrating part of the first terminal-post and part of the first flange illustrated FIG. 8A, taken along a direction.
FIG. 9A is a schematic structural view of a second terminal-post and a second flange illustrated in FIG. 4.
FIG. 9B is a schematic structural view illustrating part of the second terminal-post and part of the second flange illustrated FIG. 9A, taken along a direction.
FIG. 10 is a schematic structural view illustrating part of an end cover assembly illustrated in FIG. 2, taken along a direction.
FIG. 11 is a partial enlarged schematic view of the end cover assembly at Circle P in FIG. 10.
FIG. 12 is a block view of an electricity-consumption device provided in embodiments of the present disclosure.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

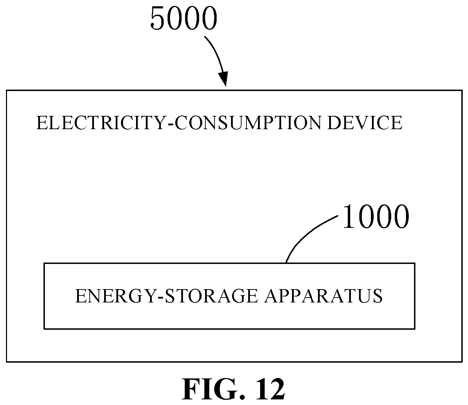

Reference can be made to FIG. 12, which is a block view of an electricity-consumption device 5000 provided in embodiments of the present disclosure. The electricity-consumption device 5000 includes an energy-storage apparatus 1000. The energy-storage apparatus 1000 is configured to store electrical energy.

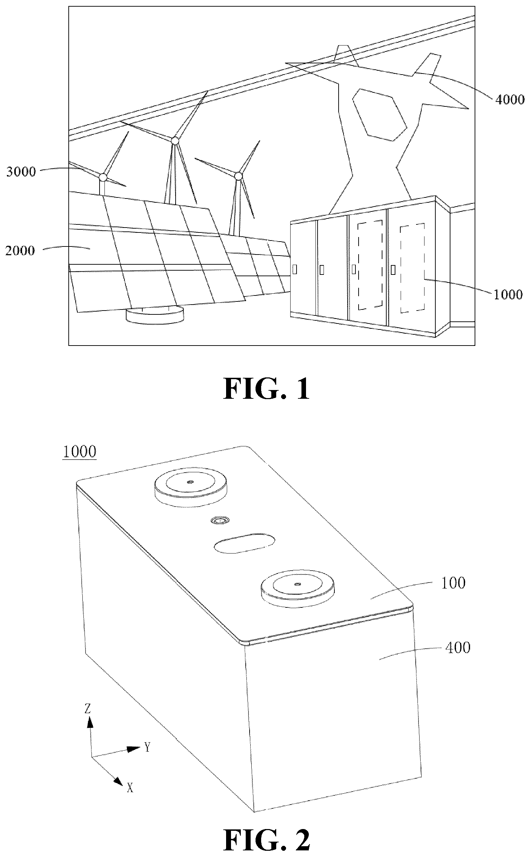

Reference can be made to FIG. 1, where FIG. 1 is an application scenario view of an energy-storage apparatus 1000 provided in embodiments of the present disclosure. The energy-storage apparatus 1000 provided in embodiments of the present disclosure is applied to an energy-storage system. The energy-storage system includes an electric-energy conversion apparatus 2000 (photovoltaic panel), a wind-energy conversion apparatus 3000 (wind turbine), a power grid 4000, and the energy-storage apparatus 1000. The energy-storage apparatus 1000 can be implemented as an energy-storage cabinet and can be mounted outdoors. Specifically, the electric-energy conversion apparatus 2000 (photovoltaic panel) can convert solar energy into electric energy during the low electricity price period, and the energy-storage apparatus 1000 is configured to store the electric energy, and to supply power to the power grid 4000 during the peak hours of energy consumption or to supply power when the power grid 4000 is powered off/out of power. The wind-energy conversion apparatus 3000 (wind turbine) can convert wind energy into electric energy, and the energy-storage apparatus 1000 is configured to store the electric energy, and to supply power to the power grid 4000 during the peak hours of energy consumption or to supply power when the power grid 4000 is powered off/out of power. The electric energy can be transmitted through high-voltage cables.

It may be understood that, the energy-storage apparatus 1000 may include, but is not limited to, a battery cell, a battery module, a battery pack, a battery system, etc. An actual application form of the energy-storage apparatus 1000 provided in embodiments of the present disclosure may be, but is not limited to, the products listed, and may also be other application forms. The application form of the energy-storage apparatus 1000 is not strictly limited in embodiments of the present disclosure. There may be multiple energy-storage apparatuses 1000, the multiple energy-storage apparatuses 1000 are connected in series or in parallel, and the multiple energy-storage apparatuses 1000 are supported and electrically connected by isolation plates (not illustrated). In this embodiment, "multiple" or "a plurality of" refers to two or more.

For illustrative purposes, in embodiments of the present disclosure, the energy-storage apparatus 1000 is merely a battery. The battery may include one or more cells.

Reference can be made to FIG. 2, where FIG. 2 is a schematic perspective structural view of the energy-storage apparatus 1000 illustrated in FIG. 1.

In some embodiments, the energy-storage apparatus 1000 includes a housing 400, an end cover assembly 100, and an electrode assembly (not illustrated). The housing 400 defines an opening and an accommodating chamber, and the accommodating chamber of the housing 400 is in communication with the opening of the housing 400. The electrode assembly is accommodated in the accommodating chamber. The end cover assembly 100 is mounted on the housing 400 and is configured to seal the opening of the housing 400. The end cover assembly 100 is mounted at one end of the electrode assembly and is electrically connected to the electrode assembly. For ease of description, a length direction of the end cover assembly 100 illustrated in FIG. 2 is denoted as an X-axis direction, a width direction of the end cover assembly 100 is denoted as a Y-axis direction, a thickness direction of the end cover assembly 100 is denoted as a Z-axis direction, and the X-axis direction, the Y-axis direction, and the Z-axis direction are perpendicular to each other. The terms such as "upper" and "lower" mentioned in the description of embodiments of the present disclosure are described according to directions as illustrated in FIG. 2 of the description, where a direction towards a positive direction of Z-axis is "upper", and a direction towards a negative direction of Z-axis is "lower", which do not constitute a limitation to the energy-storage apparatus 1000 in actual application scenarios. The terms "same" and "perpendicular" used in the following are subject to certain tolerances.

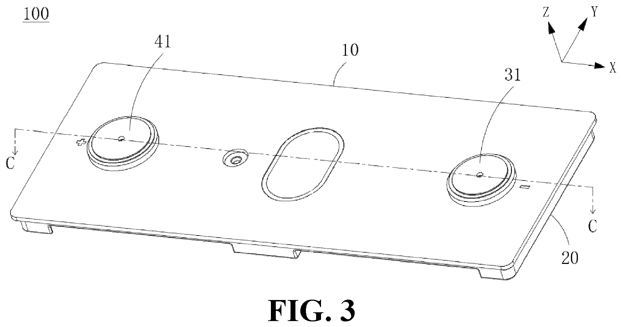

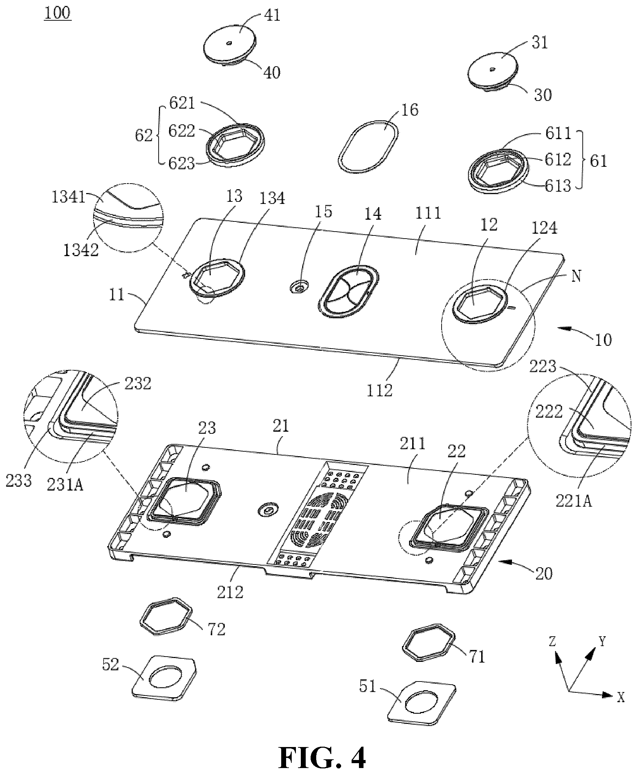

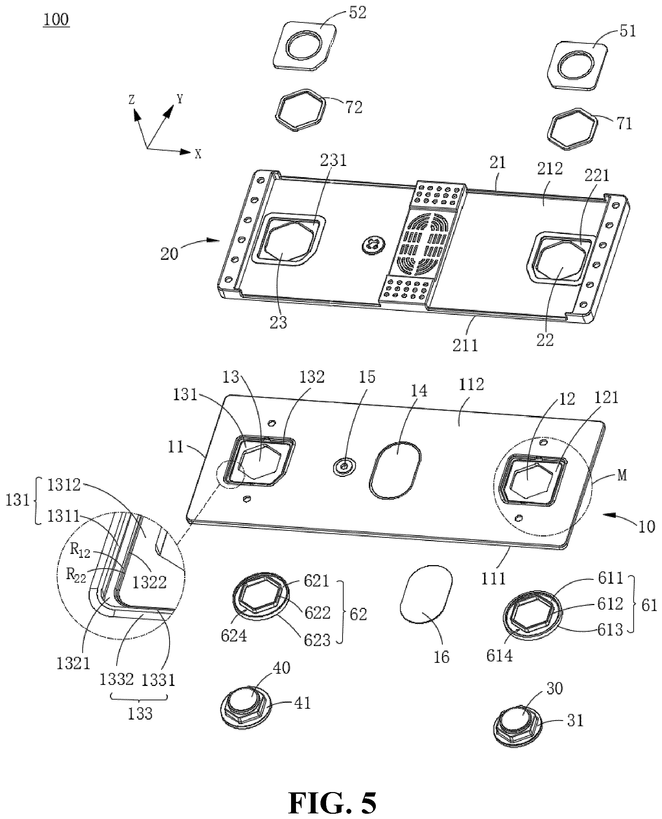

Reference can be made to FIG. 3, FIG. 4, and FIG. 5, where FIG. 3 is a schematic structural view of an end cover assembly 100 illustrated in FIG. 2, FIG. 4 is an exploded schematic structural view illustrating part of the end cover assembly 100 illustrated in FIG. 3, and FIG. 5 is an exploded schematic structural view illustrating part of the end cover assembly 100 illustrated in FIG. 3, viewed from another direction.

In this embodiment, the end cover assembly 100 includes an upper cover 10, a lower plastic member 20, a first terminal-post 30, a second terminal-post 40, a first pressing ring 51, and a second pressing ring 52. In this embodiment, the upper cover 10 is a smooth aluminum sheet, and the lower plastic member 20 is plastic and insulated. The lower plastic member 20 is mounted at one side of the upper cover 10. The first terminal-post 30 and the second terminal-post 40 each are configured to electrically connect to an electrode assembly. Exemplarily, one end of the first terminal-post 30 is connected to a first flange 31. One end of the second terminal-post 40 is connected to a second flange 41. It may be noted that, the first terminal-post 30 may be a positive terminal-post, the second terminal-post 40 may be a negative terminal-post, the first flange 31 may be a positive flange, and the second flange 41 may be a negative flange. Alternatively, the first terminal-post 30 may be a negative terminal-post, the second terminal-post 40 may be a positive terminal-post, the first flange 31 may be a negative flange, and the second flange 41 may be a positive flange.

Exemplarily, the upper cover 10 includes an upper cover body 11, an explosion-proof valve 14, and a liquid-injection hole 15. The upper cover body 11 is a long thin plate, and in a thickness direction of the upper cover body 11 (i.e., Z-axis direction), the upper cover body 11 has a front face 111 and a back face 112 opposite to the front face 111. The upper cover 10 defines a first through-hole 12 and a second through-hole 13. The first through-hole 12 and the second through-hole 13 each extend through the front face 111 and the back face 112 of the upper cover body 11. The first through-hole 12 is positioned at one of two opposite ends (arranged in an X-axis direction) of the upper cover body 11 and is configured to allow the first terminal-post 30 to pass through, and the second through-hole 13 is positioned at the other one of the two opposite ends of the upper cover body 11 and is configured to allow the second terminal-post 40 to pass through.

Exemplarily, shapes of both the first through-hole 12 and the second through-hole 13 are a hexagon, so as to match shapes of the first terminal-post 30 and the second terminal-post 40 respectively. As such, when the first terminal-post 30 and the second terminal-post 40 are connected to the upper cover 10, the first terminal-post 30 and the second terminal-post 40 are not easily rotated relative to the upper cover 10, which is conducive to improving the torsional strength of the first terminal-post 30 and the second terminal-post 40. In embodiments of the present disclosure, the shapes of the first through-hole 12 and the second through-hole 13 can be changed correspondingly with a shape of the first terminal-post 30, and the shapes of the first through-hole 12 and the second through-hole 13 may be a polygon other than the hexagon, a circle, a special shape, or the like, which is not limited in the present disclosure.

Exemplarily, in a length direction of the upper cover 10, i.e., the X-axis direction, the second through-hole 13, the liquid-injection hole 15, the explosion-proof valve 14, and the first through-hole 12 are arranged in sequence and spaced apart from each other. The explosion-proof valve 14 is positioned in the middle of the upper cover body 11. When pressure inside the energy-storage apparatus 1000 is excessively high, the explosion-proof valve 14 can automatically open to release the pressure to prevent an explosion. The liquid-injection hole 15 is positioned between the second through-hole 13 and the explosion-proof valve 14. In a liquid-injection process of a power battery, electrolyte is injected into the battery through the liquid-injection hole 15 on the upper cover 10.

In some embodiments, the upper cover 10 may further include an explosion-proof valve protection sheet 16. The explosion-proof valve protection sheet 16 is positioned facing towards the explosion-proof valve 14 and is configured to cover the explosion-proof valve 14.

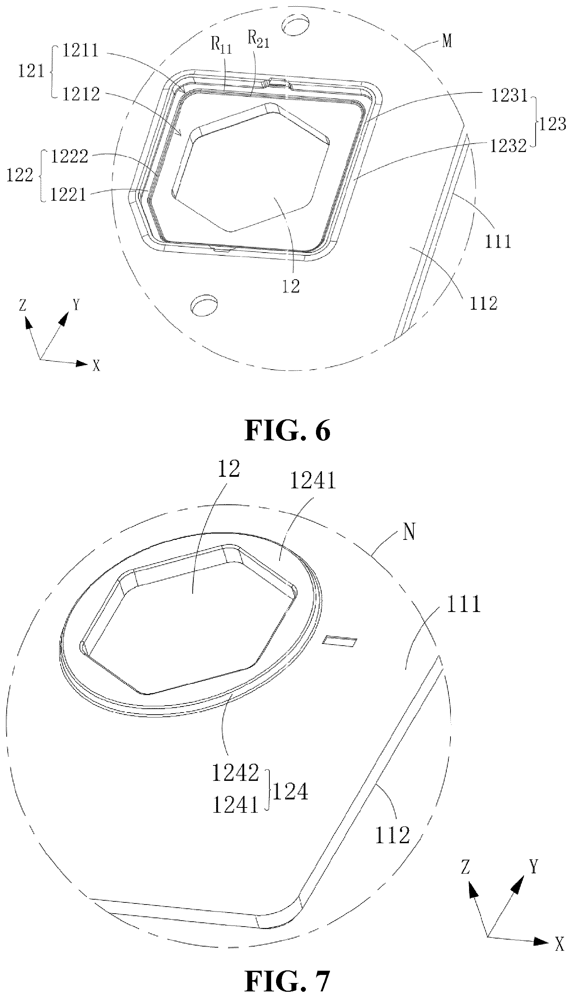

Reference can be made to FIG. 4, FIG. 5, and FIG. 6, where FIG. 6 is a partial enlarged view of the end cover assembly 100 at Circle M in FIG. 5.

In this embodiment, the upper cover 10 further includes a first protrusion 123 and a second protrusion 133. The first protrusion 123 and the second protrusion 133 both protrude from the back face 112. The first protrusion 123 and the second protrusion 133 are positioned at opposite ends of the upper-cover body 11 (arranged in the X-axis direction). The upper cover 10 further defines a first mounting recess 121 and a second mounting recess 131. The first mounting recess 121 is recessed towards the upper-cover body 11 from a surface of the first protrusion 123 positioned facing away from the upper-cover body 11. The first through-hole 12 extends through a recess bottom-wall of the first mounting recess 121 and the front face 111. The second mounting recess 131 is recessed towards the upper-cover body 11 from the surface of the second protrusion 133 facing away from the upper-cover body 11. The second through-hole 13 extends through the recess bottom-wall and the front face 111 of the second mounting recess 131. The first mounting recess 121 and the second mounting recess 131 are symmetrically distributed with respect to a midline in the length direction of the upper-cover body 11. The first mounting recess 121 and the second mounting recess 131 are configured to be connected to the lower plastic member 20 compatibly.

Exemplarily, the first protrusion 123 is annular and surrounds the first through-hole 12. The first protrusion 123 has a first flat surface 1231 and a first inclined surface 1232 connected to the first flat surface 1231. The first flat surface 1231 is connected to the recess sidewall of the first mounting recess 121. The first inclined surface 1232 is connected to the back face 112 of the upper-cover body 11. The first flat surface 1231 may be perpendicular to the thickness direction of the upper cover 10. In the direction from the front face 111 to the back face 112, the first inclined surface 1232 is inclined towards the first through-hole 12 with respect to the thickness direction (i.e., the Z-axis direction) of the upper cover 10.

**In** embodiments of the present disclosure, the first protrusion 123 can be formed through a stamping process. By setting the first inclined surface 1232 on the first protrusion 123, it is convenient to realize material flow in the process of stamping and blanking the upper cover 10 to form the first protrusion 123, and the first protrusion 123 can be obtained by stamping the upper cover 10 once. Therefore, machining is not necessary, and the machining procedure for the upper cover 10 is reduced, thereby benefiting to improve the production efficiency of the upper cover 10 and reducing the cost.

**In** this embodiment, in the thickness direction of the upper cover 10, the first protrusion 123 has a height *H₁* ranging from 0.05 mm to 0.3 mm, that is, a distance between the first flat surface 1231 and the back face 112 ranges from 0.05 mm to 0.3 mm, such as, 0.05 mm, 0.1 mm, 0.3 mm, etc. As such, the first protrusion 123 can be formed by one stamping without machining and cutting, which is beneficial to improving the production efficiency of the upper cover 10, reducing the cost, and avoiding workpiece burrs caused by machining.

Exemplarily, the second protrusion 133 is annular and surrounds the second through-hole 13. The second protrusion 133 has a second flat surface 1331 and a second inclined surface 1332 connected to the second flat surface 1331. The second flat surface 1331 is further connected to the recess sidewall of the second mounting recess 131. The second inclined surface 1332 is further connected to the back face 112 of the upper-cover body 11. In the direction from the front face 111 to the back face 112, the second inclined surface 1332 is inclined towards the second through-hole 13 with respect to the thickness direction (that is, the Z-axis direction) of the upper cover 10.

In embodiments of the present disclosure, the second protrusion 133 can be formed through a stamping process. By setting the second inclined surface 1332 on the second protrusion 133, it is convenient to realize material flow in the process of stamping and blanking the upper cover 10 to form the second protrusion 133, and the second protrusion 133 can be obtained by stamping the upper cover 10 once. Therefore, machining is not necessary, and the machining procedure for the upper cover 10 is reduced, thereby benefiting to improve the production efficiency of the upper cover 10 and reducing the cost.

In this embodiment, in the thickness direction of the upper cover 10, the second protrusion 133 has a height ranging from 0.05 mm to 0.3 mm, that is, a distance between the second flat surface 1331 and the back face 112 ranges from 0.05 mm to 0.3 mm, such as, 0.05 mm, 0.1 mm, 0.3 mm, etc. As such, the second protrusion 133 can be formed by one stamping without machining and cutting, which is beneficial to improving the production efficiency of the upper cover 10, reducing the cost, and avoiding workpiece burrs caused by machining.

In this embodiment, the upper cover 10 further includes a first reinforcing portion 122 and a second reinforcing portion 132. The first reinforcing portion 122 protrudes from the recess bottom-wall of the first mounting recess 121. The first reinforcing portion 122 surrounds the first through-hole 12 and is connected to the recess sidewall of the first mounting recess 121. That is, the first reinforcing portion 122 is annular and surrounds the first through-hole 12. In embodiments of the present disclosure, the first mounting recess 121 can be formed through the stamping process. By providing the first reinforcing portion 122, the thickness of the upper cover 10 at the first mounting recess 121 is increased, so that the structural strength of the upper cover 10 can be increased, so that the upper cover 10 is not easily deformed during the upsetting of the upper cover 10.

Exemplarily, the first mounting recess 121 includes a first mounting sub-recess 1211 and a second mounting sub-recess 1212 that are arranged in the thickness direction of the upper cover 10 and are in communication with each other. The second mounting sub-recess 1212 is recessed from the recess bottom-wall of the first mounting sub-recess 1211 towards the front face 111. The first through-hole 12 extends through both the recess bottom-wall of the first mounting sub-recess 1211 and the recess bottom-wall of the second mounting sub-recess 1212.

Exemplarily, the first reinforcing portion 122 has a third flat surface 1221 and a first step surface 1222 connected to the third flat surface 1221. The third flat surface 1221 is positioned at one side of the first reinforcing portion 122 positioned facing away from the recess bottom-wall of the first mounting recess 121. The third flat surface 1221 is connected to the recess sidewall of the first mounting recess 121. The first step surface 1222 is connected to the recess bottom-wall of the first mounting recess 121. The third flat surface 1221 is the recess bottom-wall of the first mounting sub-recess 1211.The first step surface 1222 is the recess sidewall of the second mounting sub-recess 1212. The first step surface 1222 is connected between the recess bottom-wall of the first mounting sub-recess 1211 and the recess bottom-wall of the second mounting sub-recess 1212.

Exemplarily, in the thickness direction of the upper cover 10, the first reinforcing portion 122 has a height *H₂* ranging from 0.1 mm to 0.5 mm, that is, in the Z-axis direction, a distance between the recess bottom-wall of the first mounting sub-recess 1211 and the recess bottom-wall of the second mounting sub-recess 1212 ranges from 0.1 mm to 0.5 mm. For example, *H₂* may ranges from 0.2 mm to 0.3 mm. As such, the structural design of the upper cover 10 is more reasonable, and the strength of the upper cover 10 is high.

Exemplarily, the first step surface 1222 is an inclined surface. In the direction from the back face 112 to the front face 111, the first step surface 1222 is inclined towards the first through-hole 12 with respect to the thickness direction of the upper cover 10. Round chamfering is performed at the connection of the first step surface 1222 and the third flat surface 1221 to define a chamfer *R₁₁.* Round chamfering is performed at the connection of the first step surface 1222 and the recess bottom-wall of the first mounting recess 121 to define a chamfer *R₂₁.* In other words, there is a smooth transition between the first step surface 1222 and the recess bottom-wall of the first mounting sub-recess 1211, and there is a smooth transition between the first step surface 1222 and the recess bottom-wall of the second mounting sub-recess 1212. As such, in the process of upsetting the upper cover 10, it is convenient to realize the material flow, and the first mounting sub-recess 1211 and the second mounting sub-recess 1212 can be formed by one stamping process without machining and cutting. Therefore, the machining procedure for the upper cover 10 is reduced, which is beneficial to improving production efficiency and reducing costs. Exemplarily, each of the chamfer *R₁₁* and the chamfer *R₂₁* has a radius ranging from 0.05 mm to 3 mm.

In this embodiment, the second reinforcing portion 132 protrudes from the recess bottom-wall of the second mounting recess 131. The second reinforcing portion 132 surrounds the second through-hole 13 and is connected to the recess sidewall of the second mounting recess 131. That is, the second reinforcing portion 132 is annular and surrounds the second through-hole 13. In embodiments of the present disclosure, the second mounting recess 131 can be formed through the stamping process. By providing the second reinforcing portion 132, the thickness of the upper cover 10 at the second mounting recess 131 is increased, so that the structural strength of the upper cover 10 can be increased, so that the upper cover 10 is not easily deformed during the upsetting of the upper cover 10.

Exemplarily, the second mounting recess 131 includes a third mounting sub-recess 1311 and a fourth mounting sub-recess 1312 that are arranged in the thickness direction of the upper cover 10 and are in communication with each other. The fourth mounting sub-recess 1312 is recessed from the recess bottom-wall of the third mounting sub-recess 1311 to the front face 111. The second through-hole 13 extends through both the recess bottom-wall of the third mounting sub-recess 1311 and the recess bottom-wall of the fourth mounting sub-recess 1312.

Exemplarily, the second reinforcing portion 132 has a fourth flat surface 1321 and a second step surface 1322 connected to the fourth flat surface 1321. The fourth flat surface 1321 is positioned at one side of the second reinforcing portion 132 positioned facing away from the recess bottom-wall of the second mounting recess 131. The fourth flat surface 1321 is connected to the recess sidewall of the second mounting recess 131. The second step surface 1322 is connected to the recess bottom-wall of the second mounting recess 131. The fourth flat surface 1321 is the recess bottom-wall of the third mounting sub-recess 1311.The second step surface 1222 is the recess sidewall of the fourth mounting sub-recess 1312. The second step surface 1322 is connected between the recess bottom-wall of the third mounting sub-recess 1311 and the recess bottom-wall of the fourth mounting sub-recess 1312.

Exemplarily, in the thickness direction of the upper cover 10, the second reinforcing portion 132 has a height ranging from 0.1 mm to 0.5 mm, that is, in the Z-axis direction, a distance between the recess bottom-wall of the third mounting sub-recess 1311 and the recess bottom-wall of the fourth mounting sub-recess 1312 ranges from 0.1 mm to 0.5 mm. For example, the height of the second reinforcing portion 132 may range from 0.2 mm to 0.3 mm. As such, the structural design of the upper cover 10 is more reasonable, and the strength of the upper cover 10 is high.

Exemplarily, the second step surface 1322 is an inclined surface. In the direction from the back face 112 to the front face 111, the second step surface 1322 is inclined towards the second through-hole 13 with respect to the thickness direction of the upper cover 10. Round chamfering is performed at the connection of the second step surface 1322 and the fourth flat surface 1321 to define a chamfer *R₁₂.* Round chamfering is performed at the connection of the second step surface 1322 and the recess bottom-wall of the second mounting recess 131 to define a chamfer *R₂₂.* In other words, there is a smooth transition between the second step surface 1322 and the recess bottom-wall of the third mounting sub-recess 1311, and there is a smooth transition between the second step surface 1222 and the recess bottom-wall of the fourth mounting sub-recess 1312. As such, in the process of upsetting the upper cover 10, it is convenient to realize the material flow, and the third mounting sub-recess 1311 and the fourth mounting sub-recess 1312 can be formed by one stamping process without machining and cutting. Therefore, the machining procedure for the upper cover 10 is reduced, which is beneficial to improving production efficiency and reducing costs. Exemplarily, each of the chamfer R₁₂ and the chamfer R₂₂ has a radius ranging from 0.05 mm to 3 mm.

Reference can be made to FIG. 4, FIG. 5, and FIG. 7, where FIG. 7 is a partial enlarged view of the end cover assembly 100 at Circle N in FIG. 4.

In this embodiment, the upper cover 10 further includes a first boss 124 and a second boss 134. The first boss 124 is positioned at one of two opposite ends (arranged in an X-axis direction) of the upper-cover body 11 and is configured to be connected to a first upper plastic member 61 compatibly, and the second boss 134 is positioned at the other one of the two opposite ends of the upper-cover body 11 and is configured to be connected to a second upper plastic member 62 compatibly. The first boss 124 and the second boss 134 each protrude from the front face 111 of the upper-cover body 11. The first through-hole 12 extends through the first boss 124. The second through-hole 13 extends through the second boss 134.

Exemplarily, the first boss 124 is annular, and an inner periphery of the first boss 124 is hexagonal and is connected to the first terminal-post 30 compatibly. An outer periphery of the first boss 124 is substantially circular. The first boss 124 has a first-boss top surface 1241 positioned facing away from the front face 111 and a first peripheral side surface 1242 connected to the first-boss top surface 1241, and the first peripheral side surface 1242 is further connected to the front face 111 of the upper-cover body 11. The first peripheral side surface 1242 is an inclined surface, and in a direction from the back face 112 to the front face 111, the first peripheral side surface 1242 is inclined towards the first through-hole 12 with respect to the thickness direction of the upper cover 10 (i.e., the Z-axis direction). As such, in the process of forming the first boss 124 on the upper cover 10 by upsetting, the flow of the material to the first through-hole 12 can be easily realized, thereby reducing the abrasion of a stamping mold caused by the upper cover 10, improving the product yield and the service life of the mold, and reducing the production of metal wire.

Exemplarily, an angle of the first peripheral side surface 1242 with respect to the Z-axis direction ranges from 5° to 60°. The angle of the first peripheral side surface 1242 with respect to the Z-axis direction may range from 10° to 30°, such as 10°, 20°, 30°, etc.

Exemplarily, the second boss 134 is annular, and an inner periphery of the second boss 134 is hexagonal and is connected to the second terminal-post 40 compatibly. An outer periphery of the second boss 134 is substantially circular. The second boss 134 has a second-boss top surface 1341 positioned facing away from the front face 111 and a second peripheral side surface 1342 connected to the second-boss top surface 1341, and the second peripheral side surface 1342 is further connected to the front face 111 of the upper-cover body 11. The second peripheral side surface 1342 is an inclined surface, and in a direction from the back face 112 to the front face 111, the second peripheral side surface 1342 is inclined towards the second through-hole 13 with respect to a thickness direction of the upper cover 10 (i.e., Z-axis direction). As such, in the process of forming the second boss 134 on the upper cover 10 by upsetting, the flow of the material to the second through-hole 13 can be easily realized, thereby reducing the abrasion of a stamping mold caused by the upper cover 10, improving the product yield and the service life of the mold, and reducing the production of metal wire.

Exemplarily, an angle of the second peripheral side surface 1342 with respect to the Z-axis direction ranges from 5° to 60°. The angle of the second peripheral side surface 1342 with respect to the Z-axis direction may range from 10° to 30°, such as 10°, 20°, 30°, etc.

As illustrated in FIG. 4 and FIG. 5 again, in this embodiment, the lower plastic member 20 includes a lower-plastic-member body 21. The lower-plastic-member body 21 is substantially a rectangular thin plate, and in a thickness direction of the lower-plastic-member body 21 (i.e., the Z-axis direction), the lower-plastic-member body 21 has a first surface 211 and a second surface 212 positioned facing away from the first surface 211.

Exemplarily, the lower plastic member 20 defines a first terminal-post through-hole 22, a first accommodating recess 221, a second terminal-post through-hole 23, and a second accommodating recess 231. The first accommodating recess 221 is recessed from the second surface 212 towards the first surface 211 and has a first snapped protrusion 221A on the first surface 211. The first terminal-post through-hole 22 extends through a recess bottom-wall of the first accommodating recess 221 and the first surface 211, that is, the first terminal-post through-hole 22 extends through the lower-plastic-member body 21 and the first snapped protrusion 221A. The first terminal-post through-hole 22 extends through both the recess bottom-wall of the first accommodating recess 221 and the first surface 211, that is, extends through the first snapped protrusion 221A.

Exemplarily, the first accommodating recess 221 and the first terminal-post through-hole 22 are coaxial and positioned close to one end of the lower-plastic-member body 21. The first terminal-post through-hole 22 is configured to allow the first terminal-post 30 to pass through. The first terminal-post through-hole 22 is hexagonal and is configured to be connected to the first terminal-post 30 compatibly. The first accommodating recess 221 is configured to accommodate the first pressing ring 51.

Exemplarily, the second accommodating recess 231 is recessed from the second surface 212 towards the first surface 211 and is provided with a second snapped protrusion 231A on the first surface 211. The second terminal-post through-hole 23 extends through the first surface 211 and the second surface 212, and the second terminal-post through-hole 23 extends through a recess bottom-wall of the second accommodating recess 231, that is, the second terminal-post through-hole 23 extends through the second snapped protrusion 231A.

Exemplarily, the second accommodating recess 231 and the second terminal-post through-hole 23 are coaxial and positioned close to the other end of the lower-plastic-member body 21. The second terminal-post through-hole 23 is configured to allow the second terminal-post 40 to pass through. The second terminal-post through-hole 23 is hexagonal and is configured to be connected to the second terminal-post 40 compatibly. The second accommodating recess 231 is configured to accommodate the second pressing ring 52.

In this embodiment, the lower plastic member 20 further includes a first protrusion portion 222 and a second protrusion portion 222. The first protrusion portion 222 protrudes from a surface of the first snapped protrusion 221A positioned facing away from the first surface 211. The first protrusion portion 222 and the first snapped protrusion 221A are coaxial. The first terminal-post through-hole 22 extends through the first protrusion portion 222. The first snapped protrusion 221A is configured to be connected to the first mounting sub-recess 1211 compatibly. The first protrusion portion 222 is configured to be connected to the second mounting sub-recess 1212 compatibly. The second protrusion portion 222 protrudes from a surface of the second snapped protrusion 231A positioned facing away from the first surface 211. The second protrusion portion 222 and the second snapped protrusion 231A are coaxial. The second terminal-post through-hole 23 extends through the second protrusion portion 222. The second snapped protrusion 231A is configured to be connected to the third mounting sub-recess 1311 compatibly. The second protrusion portion 222 is configured to be connected to the fourth mounting sub-recess 1312 compatibly.

In this embodiment, the lower plastic member 20 further includes a first avoidance recess 223 and a second avoidance recess 233. Both the first avoidance recess 223 and the second avoidance recess 233 are recessed from the first surface 211 towards the second surface 212. The first avoidance recess 223 surrounds the first snapped protrusion 221A. The first avoidance recess 223 is positioned facing towards the first protrusion 123 of the upper cover 10, to avoid the first protrusion 123. The second avoidance recess 233 surrounds the second snapped protrusion 231A. The second avoidance recess 233 is positioned facing towards the second protrusion 133 of the upper cover 10, to avoid the second protrusion 133.

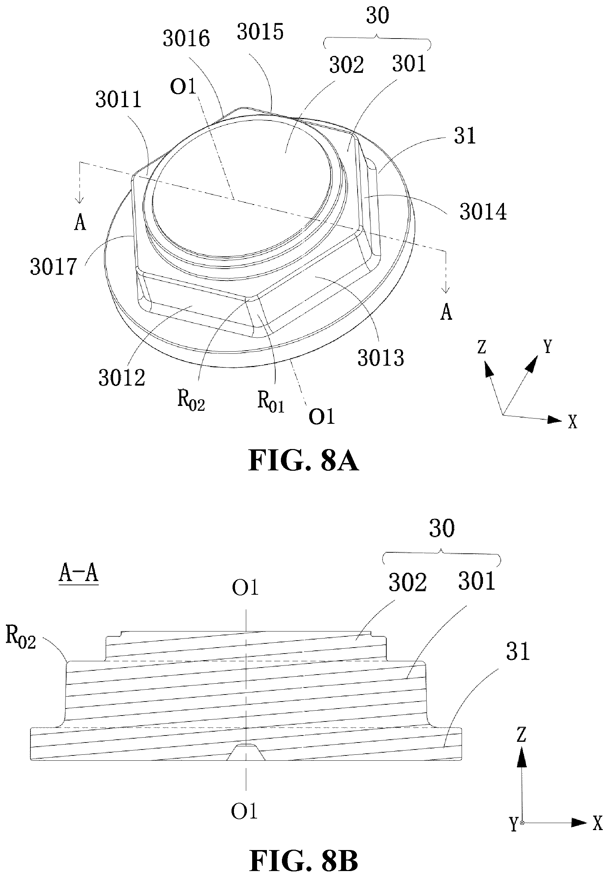

Reference can be made to FIG. 5, FIG. 8A, and FIG. 8B, where FIG. 8A is a schematic structural view of a first terminal-post 30 and a first flange 31 illustrated in FIG. 4, and FIG. 8B is a schematic structural view illustrating part of the first terminal-post 30 and the first flange 31 illustrated in FIG. 8A, taken along a direction.

In this embodiment, at least part of the first terminal-post 30 is a hexagonal prism (i.e., is hexagonal prism-shaped). It may be understood that, part of the first terminal-post 30 may be the hexagonal prism, or all of the first terminal-post 30 may be the hexagonal prism. Exemplarily, the first terminal-post 30 includes a first part 301 and a second part 302. In FIG. 8B, the first part 301, the second part 302, and the first flange 31 are schematically distinguished by using dashed lines. The second part 302 is connected to a surface of one side of the first part 301, and the first part 301 is coaxial with the second part 302. The first part 301 is a hexagonal prism. The second part 302 is a cylinder. In the height direction of the first terminal-post 30 (i.e., the Z-axis direction), an orthographic projection area of the second part 302 is less than an orthographic projection area of the first part 301. The first part 301 is configured to pass through the first through-hole 12 and is connected to the upper cover 10 compatibly, so as to achieve high torsional strength. The second part 302 is configured to be connected to the first pressing ring 51 compatibly. The second part 302 is further configured to be electrically connected to an electrode assembly in the energy-storage apparatus 1000.

In this embodiment, the first flange 31 is a cylinder. The first flange 31 is positioned at one side of the first part 301 away from the second part 302 and is connected to the first part 301. The first part 301 may be positioned at the middle of the first flange 31. The first terminal-post 30 and the first flange 31 are an integrally-formed structural member. The first terminal-post 30 and the first flange 31 can be formed through a stamping process. Exemplarily, the first part 301 of the first terminal-post 30 has a first top surface 3011 that is positioned facing towards the second part 302 and is connected to the second part 302. The first part 301 further has a first face 3012, a second face 3013, a third face 3014, a fourth face 3015, a fifth face 3016, and a sixth face 3017 connected in sequence. Each of the first face 3012, the second face 3013, the third face 3014, the fourth face 3015, the fifth face 3016, and the sixth face 3017 is connected to the first top surface 3011. The first face 3012, the second face 3013, the third face 3014, the fourth face 3015, the fifth face 3016, and the sixth face 3017 are distributed symmetrically around a central axis O1-O1 of the first terminal-post 30.

In this embodiment, round chamfering is performed between every two adjacent faces of the first face 3012, the second face 3013, the third face 3014, the fourth face 3015, the fifth face 3016, and the sixth face 3017, that is, there is a smooth transition between every two adjacent faces of the first face 3012, the second face 3013, the third face 3014, the fourth face 3015, the fifth face 3016, and the sixth face 3017. As such, in the manufacturing process of the first terminal-post 30, the abrasion of a mold can be reduced, and the flow of the material can also be facilitated, thereby improving the manufacturing process yield of the first terminal-post 30. In addition, the flow resistance of the material during stamping of the first terminal-post 30 can be reduced, and the surface layer of the first part 301 is not prone to breakage. Exemplarily, round chamfering is performed between the first face 3012 and the second face 3013 to define chamfer *R₀₁,* that is, there is a smooth transition between the first face 3012 and the second face 3013. The chamfer *R₀₁* has a radius ranging from 0.5 mm to 5.0 mm. For example, the chamfer *R₀₁* may have a radius ranging from 1.5 mm to 2.5 mm.

Exemplarily, round chamfering is performed at the connection of the second face 3013 and the third face 3014, the connection of the third face 3014 and the fourth face 3015, the connection of the fourth face 3015 and the fifth face 3016, the connection of the fifth face 3016 and the sixth face 3017, and the connection of the sixth face 3017 and the first face 3012. For details, reference can be made to the chamfer between the first face 3012 and the second face 3013, which will not be repeated herein.

In this embodiment, round chamfering is performed at the connection of the first top surface 3011 and each of the first face 3012, the second face 3013, the third face 3014, the fourth face 3015, the fifth face 3016, and the sixth face 3017, that is, there is a smooth transition between the first top surface 3011 and each of the first face 3012, the second face 3013, the third face 3014, the fourth face 3015, the fifth face 3016, and the sixth face 3017. As such, the manufacturing process difficulty of the first terminal-post 30 can be reduced, and the flow of the material in the manufacturing process of the first terminal-post 30 can be facilitated. Exemplarily, a chamfer *R₀₂* is defined at the connection of the first top surface 3011 and the first face 3012. The chamfer *R₀₂* has a radius ranging from 0.1 mm to 1 mm. For example, the chamfer *R₀₂* has a radius ranging from 0.25 mm to 0.5 mm.

Exemplarily, round chamfering is performed at the connection of the first top surface 3011 and the second face 3013, the connection of the first top surface 3011 and the third face 3014, the connection of the first top surface 3011 and the fourth face 3015, the connection of the first top surface 3011 and the fifth face 3016, and the connection of the first top surface 3011 and the sixth face 3017. In addition, the range of the chamfer between the first top surface 3011 and each of the second face 3013, the third face 3014, the fourth face 3015, the fifth face 3016, and the sixth face 3017 is equal to the range of the chamfer between the first top surface 3011 and the first face 3012.

In this embodiment, in a direction from the first flange 31 to the first terminal-post 30 (i.e., in a direction from the first part 301 to the second part 302), each of the first face 3012, the second face 3013, the third face 3014, the fourth face 3015, the fifth face 3016, and the sixth face 3017 is inclined towards a center of the first terminal-post 30, that is, each of the first face 3012, the second face 3013, the third face 3014, the fourth face 3015, the fifth face 3016, and the sixth face 3017 is angled relative to the Z-axis. In this case, an area of the first top surface 3011 of the first part 301 is less than an area of a surface of the first part 301 away from the second part 302. As such, in the manufacturing process of the first terminal-post 30, the abrasion of a mold can be reduced, and the flow of the material can also be facilitated, thereby improving the manufacturing process yield of the first terminal-post 30. In addition, the flow resistance of the material during stamping of the first terminal-post 30 can be reduced, and the surface layer of the first part 301 is not prone to breakage. Exemplarily, an angle of each of the first face 3012, the second face 3013, the third face 3014, the fourth face 3015, the fifth face 3016, and the sixth face 3017 with respect to the Z-axis ranges from 0.05° to 5°. For example, an angle of each of the first face 3012, the second face 3013, the third face 3014, the fourth face 3015, the fifth face 3016, and the sixth face 3017 with respect to the Z-axis ranges from 1° to 3°.

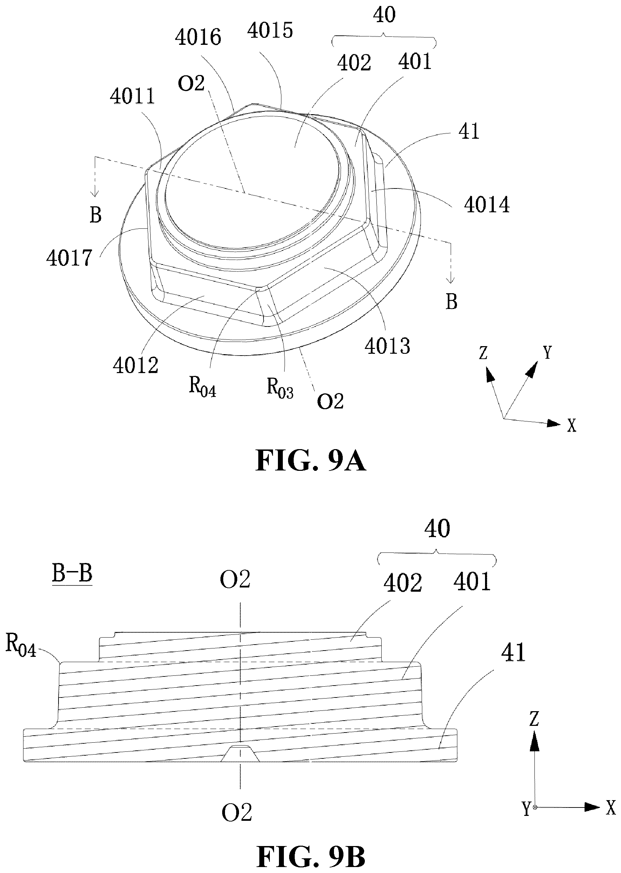

Reference can be made to FIG. 5, FIG. 9A, and FIG. 9B, where FIG. 9A is a schematic structural view of a second terminal-post 40 and a second flange 41 illustrated in FIG. 4, and FIG. 9B is a schematic structural view illustrating part of the second terminal-post 40 and the second flange 41 illustrated in FIG. 9A, taken along a direction. In some embodiments, at least part of the second terminal-post 40 is a hexagonal prism. It may be understood that, part of the second terminal-post 40 may be the hexagonal prism, or all of the second terminal-post 40 may be the hexagonal prism. Exemplarily, the second terminal-post 40 includes a third part 401 and a fourth part 402. In FIG. 9B, the third part 401, the fourth part 402, and the second flange 41 are schematically distinguished by using dashed lines. The fourth part 402 is connected to a side surface of the third part 401. The third part 401 is coaxial with the fourth part 402. The third part 401 is a hexagonal prism. The fourth part 402 is a cylinder. In the height direction of the second terminal-post 40 (i.e., the Z-axis direction), an orthographic projection area of the fourth part 402 is less than an orthographic projection area of the third part 401. The third part 401 is configured to pass through the second through-hole 13 and is connected to the upper cover 10 compatibly, so as to achieve high torsional strength. The fourth part 402 is configured to be connected to the second pressing ring 52 compatibly. The fourth part 402 is further configured to be electrically connected to the electrode assembly in the energy-storage apparatus 1000.

In this embodiment, the second flange 41 is a cylinder. The second flange 41 is positioned at one side of the third part 401 away from the fourth part 402 and is connected to the third part 401. The third part 401 may be positioned at the middle of the second flange 41. The second terminal-post 40 and the second flange 41 are an integrally-formed structural member. The second terminal-post 40 and the second flange 41 can be formed through a stamping process. Exemplarily, the second part 401 of the second terminal-post 40 has a second top surface 4011 that is positioned facing towards the fourth part 402 and is connected to the fourth part 402. The third part 401 further has a seventh face 4012, an eighth face 4013, a ninth face 4014, a tenth face 4015, an eleventh face 4016, and a twelfth face 4017 connected in sequence. Each of the seventh face 4012, the eighth face 4013, the ninth face 4014, the tenth face 4015, the eleventh face 4016, and the twelfth face 4017 is connected to the second top surface 4011. The seventh face 4012, the eighth face 4013, the ninth face 4014, the tenth face 4015, the eleventh face 4016, and the twelfth face 4017 are distributed symmetrically around a central axis O2-O2 of the second terminal-post 40.

In this embodiment, round chamfering is performed between every two adjacent faces of the seventh face 4012, the eighth face 4013, the ninth face 4014, the tenth face 4015, the eleventh face 4016, and the twelfth face 4017, that is, there is a smooth transition between every two adjacent faces of the seventh face 4012, the eighth face 4013, the ninth face 4014, the tenth face 4015, the eleventh face 4016, and the twelfth face 4017. As such, in the manufacturing process of the second terminal-post 40, the abrasion of a mold can be reduced, and the flow of the material can also be facilitated, thereby improving the manufacturing process yield of the second terminal-post 40. In addition, the flow resistance of the material during stamping of the second terminal-post 40 can be reduced, and the surface layer of the third part 401 is not prone to breakage. Exemplarily, round chamfering is performed between the seventh face 4012 and the eighth face 4013 to define chamfer *R₀₃,* that is, there is a smooth transition between the seventh face 4012 and the eighth face 4013. The chamfer *R₀₃* has a radius ranging from 0.5 mm to 5.0 mm. For example, the chamfer *R₀₃* may have a radius ranging from 1.5 mm to 2.5 mm.

Exemplarily, round chamfering is performed at the connection of the eighth face 4013 and the ninth face 4014, the connection of the ninth face 4014 and the tenth face 4015, the connection of the tenth face 4015 and the eleventh face 4016, the connection of the eleventh face 4016 and the twelfth face 4017, and the connection of the twelfth face 4017 and the seventh face 4012. For details, reference can be made to the chamfer between the seventh face 4012 and the eighth face 4013, which will not be repeated herein.

In this embodiment, round chamfering is performed at the connection of the second top surface 4011 and each of the seventh face 4012, the eighth face 4013, the ninth face 4014, the tenth face 4015, the eleventh face 4016, and the twelfth face 4017, that is, there is a smooth transition between the first top surface 3011 and each of the seventh face 4012, the eighth face 4013, the ninth face 4014, the tenth face 4015, the eleventh face 4016, and the twelfth face 4017. As such, the manufacturing process difficulty of the second terminal-post 40 can be reduced, and the flow of the material in the manufacturing process of the second terminal-post 40 can be facilitated. Exemplarily, a chamfer *R₀₄* is defined at the connection of the second top surface 4011 and the seventh face 4012. The chamfer *R₀₄* has a radius ranging from 0.1 mm to 1 mm. For example, the chamfer *R₀₄* has a radius ranging from 0.25 mm to 0.5 mm.

Exemplarily, round chamfering is performed at the connection of the second top surface 3011 and the eighth face 4013, the connection of the second top surface 4011 and the ninth face 4014, the connection of the second top surface 4011 and the tenth face 4015, the connection of the second top surface 4011 and the eleventh face 4016, and the connection of the second top surface 4011 and the twelfth face 4017. In addition, the range of the chamfer between the second top surface 3011 and each of the eighth face 4013, the ninth face 4014, the tenth face 4015, the eleventh face 4016, and the twelfth face 4017 is equal to the range of the chamfer between the second top surface 4011 and the seventh face 4012.

In this embodiment, in a direction from the second flange 41 to the second terminal-post 40 (i.e., in a direction from the third part 401 to the fourth part 402), each of the seventh face 4012, the eighth face 4013, the ninth face 4014, the tenth face 4015, the eleventh face 4016, and the twelfth face 4017 is inclined towards a center of the second terminal-post 40, that is, an area of the second top surface 4011 of the third part 401 is less than an area of a surface of the third part 401 away from the fourth part 402. As such, in the manufacturing process of the second terminal-post 40, the abrasion of a mold can be reduced, and the flow of the material can also be facilitated, thereby improving the manufacturing process yield of the second terminal-post 40. In addition, the flow resistance of the material during stamping of the second terminal-post 40 can be reduced, and the surface layer of the third part 401 is not prone to breakage. Exemplarily, an angle of each of the seventh face 4012, the eighth face 4013, the ninth face 4014, the tenth face 4015, the eleventh face 4016, and the twelfth face 4017 with respect to the Z-axis ranges from 0.05° to 5°. For example, an angle of each of the seventh face 4012, the eighth face 4013, the ninth face 4014, the tenth face 4015, the eleventh face 4016, and the twelfth face 4017 with respect to the Z-axis ranges from 1° to 3°.

In some other embodiments, the at least part of the first terminal-post 30 and the at least part of the second terminal-post 40 may also be of a polygonal prism structure such as a quadrangular prism or an octagonal prism, or a structure such as a circular prism or a special-shaped prism. It may be understood that, the polygonal prism structure may be a regular polygonal prism structure such as a regular quadrangular prism, a regular octagonal prism, or the like. Alternatively, the polygonal prism structure may not be the regular polygonal prism structure, for example, four corners of the regular quadrangular prism may be cut and removed to form an octagonal prism with four short sides and four long sides.

In some other embodiments, one or more planes may be further formed by cutting the cylindrical first terminal-post 30 in the height direction of the first terminal-post 30 and the cylindrical second terminal-post 40 in the height direction of the second terminal-post 40. As such, when the first terminal-post 30 and the second terminal-post 40 are connected to the upper cover 10 compatibly, the first terminal-post 30 and the second terminal-post 40 are not easily rotated relative to the upper cover 10, thereby improving the torsional strength of the first terminal-post 30 and the second terminal-post 40. For example, centrosymmetric four planes are formed by cutting the cylindrical first terminal-post 30 in the height direction of the first terminal-post 30 and the cylindrical second terminal-post 40 in the height direction of the second terminal-post 40. As such, the first terminal-post 30 and the second terminal-post 40 can have a better anti-twist effect and fewer processing process.

In this embodiment, the first pressing ring 51 is sleeved on the first terminal-post 30 and is fixedly connected to the first terminal-post 30 and the lower plastic member 20. Exemplarily, an inner sidewall of the first pressing ring 51 is circular and is connected to the second part 302 of the first terminal-post 30 compatibly. An outer periphery of the first pressing ring 51 is substantially pentagonal, and one side of the first pressing ring 51 is a short side. It may be understood that, the first pressing ring 51 can be obtained by cutting and removing one corner of a rectangular pressing ring. As such, when the first pressing ring 51 is connected to the lower plastic member 20, the first pressing ring 51 is not easily rotated relative to the lower plastic member 20 and the upper cover 10, and the first terminal-post 30 is also not easily rotated relative to the upper cover 10, which is conducive to improving the torsional strength of the first terminal-post 30.

Exemplarily, the second pressing ring 52 is sleeved on the second terminal-post 40 and is fixedly connected to the second terminal-post 40 and the lower plastic member 20. Exemplarily, an inner sidewall of the second pressing ring 52 is circular and is connected to the fourth part 402 of the second terminal-post 40 compatibly. An outer sidewall of the second pressing ring 52 is substantially pentagonal, and one side of the second pressing ring 52 is a short side. It may be understood that, the second pressing ring 52 can be obtained by cutting and removing one corner of a rectangular pressing ring. As such, when the second pressing ring 52 is connected to the lower plastic member 20, the second pressing ring 52 is not easily rotated relative to the lower plastic member 20 and the upper cover 10, and thus the second terminal-post 40 is also not easily rotated relative to the upper cover 10, which is conducive to improving the torsional strength of the second terminal-post 40.

In this embodiment, the end cover assembly 100 further includes a first upper plastic member 61 and a second upper plastic member 62. The first upper plastic member 61 and the second upper plastic member 62 each are an annular body. The first upper plastic member 61 is configured to be fixedly connected to the upper cover 10 and is sleeved on the first part 301 of the first terminal-post 30 and the first flange 31, that is, the first terminal-post 30 and the first flange 31 are connected to and are insulated from the upper cover 10 through the first upper plastic member 61. The second upper plastic member 62 is configured to be fixedly connected to the upper cover 10 and is sleeved on the third part 401 of the second terminal-post 40 and the second flange 41, that is, the second terminal-post 40 and the second flange 41 are connected to and are insulated from the upper cover 10 through the second upper plastic member 62.

Exemplarily, the first upper plastic member 61 includes a first body portion 611, a first inner-ring portion 612, and a first outer-ring portion 613. An outer periphery of the first body portion 611 is circular, the first body portion 611 defines a through-hole, and the first inner-ring portion 612 is disposed around the through-hole of the first body portion 611 and protrudes from a surface of one side of the first body portion 611. The through-hole of the first body portion 611 and the first inner-ring portion 612 each are in the shape of a regular hexagon. The first outer-ring portion 613 surrounds the first body portion 611 and is connected to the first body portion 611. The first outer-ring portion 613 partially protrudes from two side surfaces of the first body portion 611, and cooperates with the first body portion 611 and the first inner-ring portion 612 to define a first limiting groove 614.

Exemplarily, the through-hole of the first body portion 611 and the first inner-ring portion 612 each are in the shape of a regular hexagon and are configured to connect to the first terminal-post 30 compatibly. In embodiments of the present disclosure, a shape of the through-hole of the first body portion 611 and a shape of the first inner-ring portion 612 can be changed correspondingly with a shape of the first terminal-post 30, and the through-hole of the first body portion 611 and the first inner-ring portion 612 may be in the shape of a polygonal ring, a circular ring, or a special ring, which is not limited in the present disclosure.

In this embodiment, the second upper plastic member 62 includes a second body portion 621, a second inner-ring portion 622, and a second outer-ring portion 623. An outer periphery of the second body portion 621 is circular, the second body portion 621 defines a through-hole, and the second inner-ring portion 622 is disposed around the through-hole of the second body portion 621 and protrudes from a surface of one side of the second body portion 621. The through-hole of the second body portion 621 and the second inner-ring portion 622 each are in the shape of a regular hexagon. The second outer-ring portion 623 surrounds the second body portion 621 and is connected to the second body portion 621. The second outer-ring portion 623 partially protrudes from surfaces of two sides of the second body portion 621, and cooperates with the second body portion 621 and the second inner-ring portion 622 to define a second limiting groove 624.

Exemplarily, the through-hole of the second body portion 621 and the second inner-ring portion 622 each are in the shape of a regular hexagon and are configured to connect to the second terminal-post 40 compatibly. In embodiments of the present disclosure, a shape of the through-hole of the second body portion 621 and a shape of the second inner-ring portion 622 can be changed correspondingly with a shape of the second terminal-post 40, and the through-hole of the second body portion 621 and the second inner-ring portion 622 may be in the shape of a polygonal ring, a circular ring, or a special ring, which is not limited in the present disclosure.

In this embodiment, the end cover assembly 100 further includes a first sealing member 71 and a second sealing member 72. The first sealing member 71 and the second sealing member 72 each are a hexagonal annular elastic member, which can be made of a rubber material. The first sealing member 71 is configured to be connected to the first terminal-post 30 compatibly. The second sealing member 72 is configured to be connected to the second terminal-post 40 compatibly.

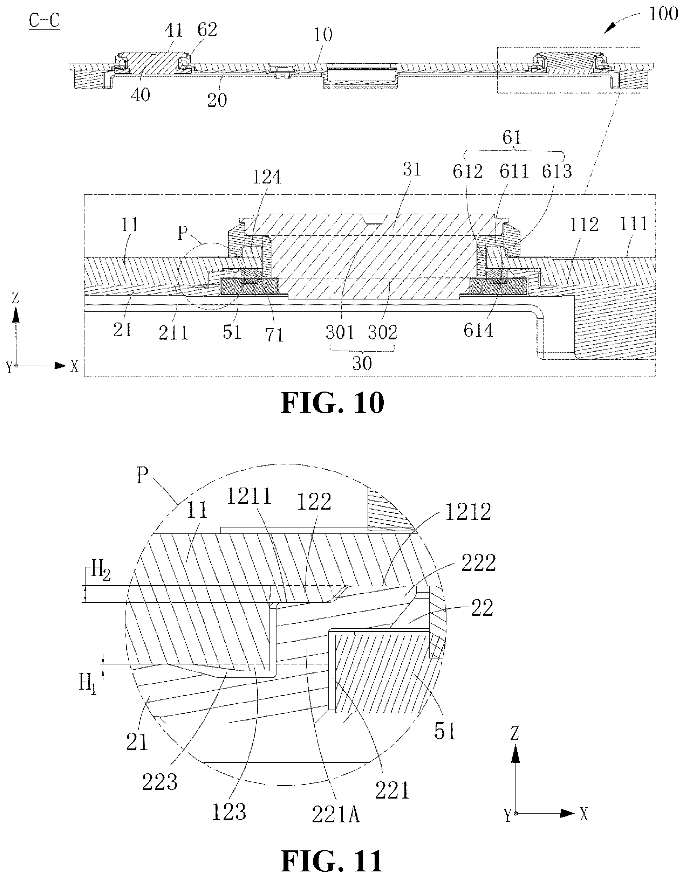

Reference can be made to FIG. 4, FIG. 5, FIG. 10, and FIG. 11, where FIG. 10 is a schematic structural view illustrating part of an end cover assembly 100 illustrated in FIG. 2, taken along a direction, and FIG. 11 is a partial enlarged schematic view of the end cover assembly 100 at Circle P in FIG. 10.

In this embodiment, the lower plastic member 20 is stacked with and connected to the upper cover 10. A length of the lower plastic member 20 is equivalent to a length of the upper cover 10, and a width of the lower plastic member 20 is equivalent to a width of the upper cover 10, where a certain tolerance range is allowed. The lower plastic member 20 is positioned at one side of the back face 112 of the upper-cover body 11 facing away from the front face 111 of the upper-cover body 11, and is stacked with and connected to the upper cover 10. Exemplarily, the first surface 211 of the lower plastic member 20 is positioned facing towards and attached to the back face 112 of the upper-cover body 11. In the thickness direction of the upper cover 10 (Z-axis direction), the first terminal-post through-hole 22 of the lower plastic member 20 is positioned facing towards and in communication with the first through-hole 12 of the upper cover 10, and the second terminal-post through-hole 23 of the lower plastic member 20 is positioned facing towards and in communication with the second through-hole 13 of the upper cover 10.

Exemplarily, the first snapped protrusion 221A of the lower plastic member 20 is inserted into the first mounting sub-recess 1211, so that the first snapped protrusion 221A can be snapped into the first mounting sub-recess 1211 to achieve mutual positioning. The first protruding portion 222 of the lower plastic member 20 is inserted into the second mounting sub-recess 1212, so that the first protruding portion 222 can be snapped into the second mounting sub-recess 1212 to achieve mutual positioning. In FIG. 10 and FIG. 11, the lower-plastic-member body 21, the first snapped protrusion 221A, and the first protrusion portion 222 are schematically distinguished by using dashed lines. The first reinforcing portion 122 is in contact with and connected to both the first snapped protrusion 221A and the first protrusion portion 222. In FIG. 10 and FIG. 11, the upper-cover body 11 and the first reinforcing portion 122 are schematically distinguished by using dashed lines. In this case, the first protrusion 123 of the upper cover 10 is positioned in the first avoidance recess 223 of the lower plastic member 20, and at least a part of the first accommodating recess 221 is positioned in the first mounting recess 121. In FIG. 10 and FIG. 11, the upper-cover body 11 and the first protrusion 123 are schematically distinguished by using dashed lines.

Exemplarily, the first terminal-post 30 passes through the first terminal-post through-hole 22 and the first through-hole 12. Specifically, the first part 301 passes through the first through-hole 12 and the first terminal-post through-hole 22. The first pressing ring 51 is sleeved on the second part 302 of the first terminal-post 30 and is fixedly connected to the second part 302. The first pressing ring 51 is accommodated in the first accommodating recess 221 of the lower plastic member 20 and is fixedly connected to a recess wall of the first accommodating recess 221. Compared with a solution in which the first terminal-post 30 is cylindrical, in the present disclosure, at least part of the first terminal-post 30 is set to be a hexagonal prism (or another polygonal prism), and the shapes of the first through-hole 12 and the first terminal-post through-hole 22 are also set to be a shape corresponding to the first terminal-post 30, so that when the first terminal-post 30 is connected to the upper cover 10 compatibly, the first terminal-post 30 is not easily rotated relative to the upper cover 10. As such, the torsional strength of the first terminal-post 30 can be improved, which is conducive to preventing a part of the lower plastic member 20 positioned between the first pressing ring 51 and the upper-cover body 11 from being cut.

Exemplarily, the first protrusion portion 222, the first snapped protrusion 221 A, and a part of the lower-plastic-member body 21 that are positioned between the upper-cover body 11 and the first terminal-post 30. In a direction perpendicular to the thickness direction of the end cover assembly 100 (i.e., in the X-axis direction and Y-axis direction), an orthographic projection of the first pressing ring 51 on the lower plastic member 20 covers an orthographic projection of the first protrusion 123 on the lower plastic member 20. It may be understood that, in the direction perpendicular to the thickness of the end cover assembly 100 (i.e., in the X-axis direction and Y-axis direction), a part of the orthographic projection of the first pressing ring 51 on the lower plastic member 20 overlaps the orthographic projection of the first protrusion 123 on the lower plastic member 20, and a part of the orthographic projection of the first pressing ring 51 on the lower plastic member 20 overlaps a part of an orthographic projection of the recess sidewall of the first mounting sub-recess 1211 on the lower plastic member 20. In embodiments of the present disclosure, the first protrusion 123 surrounds the first mounting recess 121, so that the height of the recess sidewall of the first mounting recess 121 is increased, and thus the area of the recess sidewall of the first mounting recess 121 is increased. When the first pressing ring 51 is accommodated in the first mounting recess 121, the overlapping area of the upper cover 10 and the first pressing ring 51 in the direction perpendicular to the thickness of the end cover assembly 100 can be increased. Therefore, the first pressing ring 51 and the first terminal-post 30 are not easy to rotate relative to the upper cover 10, which is beneficial to improving the torsional strength of the first terminal-post 30, and preventing, the first protrusion portion 222, the first snapped protrusion 221A, and the part of the lower-plastic-member body 21 of the lower plastic member 20 that are positioned between the first pressing ring 51 and the upper-cover body 11, from being cut.

In this embodiment, the second snapped protrusion 231A of the lower plastic member 20 is inserted into the third mounting sub-recess 1311, so that the second snapped protrusion 231A can be snapped into the third mounting sub-recess 1311 to achieve mutual positioning. The second protruding portion 232 of the lower plastic member 20 is inserted into the fourth mounting sub-recess 1312, so that the second protruding portion 232 can be snapped into the fourth mounting sub-recess 1312 to achieve mutual positioning. The second reinforcing portion 132 is in contact with and connected to both the second snapped protrusion 231A and the second protrusion portion 232. In this case, the second protrusion 133 of the upper cover 10 is positioned in the second avoidance recess 233 of the lower plastic member 20, and at least a part of the second accommodating recess 231 is positioned in the second mounting recess 131.

Exemplarily, the second terminal-post 40 passes through the second terminal-post through-hole 23 and the second through-hole 13. Specifically, the third part 401 passes through the second through-hole 13 and the second terminal-post through-hole 23. The second pressing ring 52 is sleeved on the fourth part 402 of the second terminal-post 40 and is fixedly connected to the fourth part 402. The second pressing ring 52 is accommodated in the second accommodating recess 231 of the lower plastic member 20 and is fixedly connected to a recess wall of the second accommodating recess 231. Compared with a solution in which the second terminal-post 40 is cylindrical, in the present disclosure, at least part of the second terminal-post 40 is set to be a hexagonal prism (or another polygonal prism), and the shapes of the second through-hole 13 and the second terminal-post through-hole 23 are also set to be a shape corresponding to the second terminal-post 40, so that when the second terminal-post 40 is connected to the upper cover 10 compatibly, the second terminal-post 40 is not easily rotated relative to the upper cover 10. As such, the torsional strength of the second terminal-post 40 can be improved, which is conducive to preventing a part of the lower plastic member 20 positioned between the second pressing ring 52 and the upper-cover body 11 from being cut.

Exemplarily, the second protrusion portion 232, the second snapped protrusion 231 A, and a part of the lower-plastic-member body 21 that are positioned between the upper-cover body 11 and the second terminal-post 40. In a direction perpendicular to the thickness direction of the end cover assembly 100 (i.e., in the X-axis direction and Y-axis direction), an orthographic projection of the second pressing ring 52 on the lower plastic member 20 covers an orthographic projection of the second protrusion 123 on the lower plastic member 20. It may be understood that, in the direction perpendicular to the thickness of the end cover assembly 100 (i.e., in the X-axis direction and Y-axis direction), a part of the orthographic projection of the second pressing ring 52 on the lower plastic member 20 overlaps the orthographic projection of the second protrusion 133 on the lower plastic member 20, and a part of the orthographic projection of the second pressing ring 52 on the lower plastic member 20 overlaps a part of an orthographic projection of the recess sidewall of the second mounting sub-recess 1311 on the lower plastic member 20.

In embodiments of the present disclosure, the second protrusion 133 surrounds the second mounting recess 131, so that the height of the recess sidewall of the second mounting recess 131 is increased, and thus the area of the recess sidewall of the second mounting recess 131 is increased. When the second pressing ring 52 is accommodated in the second mounting recess 131, the overlapping area of the upper cover 10 and the second pressing ring 52 in the direction perpendicular to the thickness of the end cover assembly 100 can be increased, so that the connection area of the second pressing ring 52 and the upper cover 10 can be increased. Therefore, the second pressing ring 52 and the second terminal-post 40 are not easy to rotate relative to the upper cover 10, which is beneficial to improving the torsional strength of the second terminal-post 40, and preventing the part of the lower plastic member 20 positioned between the second pressing ring 52 and the upper-cover body 11 from being cut.

In this embodiment, each of the first upper plastic member 61 and the first pressing ring 51 is sleeved on a periphery of the first terminal-post 30, and is connected to the front face 111 of the upper-cover body 11. Exemplarily, the first inner-ring portion 612 of the first upper plastic member 61 surrounds the first terminal-post 30 and is clamped between the first through-hole 12 and the first terminal-post 30. The first outer-ring portion 613 of the first upper plastic member 61 is sleeved on the first flange 31, and the first flange 31 is connected to both the first outer-ring portion 613 and the first body portion 611.

In this embodiment, the first boss 124 of the upper-cover body 11 is positioned in the first limiting groove 614 of the first upper plastic member 61, and the first boss 124 is connected to each of the first outer-ring portion 613, the first body portion 611, and the first inner-ring portion 612. In FIG. 10 and FIG. 11, the upper-cover body 11 and the first boss 124 are schematically distinguished by using dashed lines. In embodiments of the present disclosure, with the arrangement of the first boss 124 at an edge of the first through-hole 12, a height of a hole wall of the first through-hole 12 is increased, and thus a connection area of the first terminal-post 30 and the upper cover 10 is increased, which is conducive to preventing twisting of the first terminal-post 30 relative to the upper cover 10, thereby reducing cutting of the lower plastic member 20. In addition, in the length direction (i.e., the X-axis direction) of the upper cover 10, by defining the second mounting sub-recess 1212, a distance from the recess sidewall of the second mounting sub-recess 1212 to the hole wall of the first through-hole 12 is smaller than the distance from the recess sidewall of the first mounting sub-recess 1211 to the hole wall of the first through-hole 12. In other words, by providing the first reinforcing portion 122, the force arm is shortened, so that the upper cover 10 can bear a larger external force at the first mounting recess 121, which is beneficial to improving the structural strength of the upper cover 10.

In this embodiment, each of the second upper plastic member 62 and the second pressing ring 52 is sleeved on a periphery of the second terminal-post 40, and is connected to the front face 111 of the upper-cover body 11. Exemplarily, the second inner-ring portion 622 of the second upper plastic member 61 surrounds the second terminal-post 40 and is clamped between the second through-hole 13 and the second terminal-post 40. The second outer-ring portion 623 of the second upper plastic member 62 is sleeved on the second flange 41, and the second flange 41 is connected to both the second outer-ring portion 623 and the second body portion 621. In FIG. 10, the first body portion 611, the first inner-ring portion 612, and the first outer-ring portion 613 are schematically distinguished by using dashed lines.

In this embodiment, the second boss 134 of the upper-cover body 11 is positioned in the second limiting groove 624 of the second upper plastic member 62, and the second boss 134 is connected to each of the second outer-ring portion 623, the second body portion 621, and the second inner-ring portion 622. In embodiments of the present disclosure, with the arrangement of the first boss 134 at an edge of the second through-hole 13, a height of a hole wall of the second through-hole 13 is increased, and thus a connection area of the second terminal-post 40 and the upper cover 10 is increased, which is conducive to preventing twisting of the second terminal-post 40 relative to the upper cover 10, thereby reducing cutting of the lower plastic member 20. In addition, in the length direction (i.e., the X-axis direction) of the upper cover 10, by defining the fourth mounting sub-recess 1312, a distance from the recess sidewall of the fourth mounting sub-recess 1312 to the hole wall of the second through-hole 13 is smaller than the distance from the recess sidewall of the third mounting sub-recess 1311 to the hole wall of the second through-hole 13. In other words, by providing the second reinforcing portion 132, the force arm is shortened, so that the upper cover 10 can bear a larger external force at the second mounting recess 131, which is beneficial to improving the structural strength of the upper cover 10.

It may be understood that, the first upper plastic member 61 and the second upper plastic member 62 are formed by in-mold injection molding after the lower plastic member 20, the first terminal-post 30, and the second terminal-post 40 are assembled with the upper cover 10. That is, in the forming process, the above position and connection relationships occur between the first upper plastic member 61 and the first terminal-post 30, between the second upper plastic member 62 and the second terminal-post 40, between each of the first upper plastic member 61 and the second upper plastic member 62 and the upper cover 10, and between each of the first upper plastic member 61 and the second upper plastic member 62 and the lower plastic member 20. For example, the first inner-ring portion 612 of the first upper plastic member 61 is directly formed between the first through-hole 12 and the first terminal-post 30 and is clamped between the first through-hole 12 and the first terminal-post 30. The first body portion 611 of the first upper plastic member 61 is directly formed between the first flange 31 and the first boss 124 and is clamped between the first flange 31 and the first boss 124. The second inner-ring portion 622 of the second upper plastic member 62 is directly formed between the second through-hole 13 and the second terminal-post 40 and is clamped between the second through-hole 13 and the second terminal-post 40. The second body portion 621 of the second upper plastic member 62 is directly formed between the second flange 41 and the second boss 134 and is clamped between the second flange **41** and the second boss 134.

Exemplarily, the first sealing member 71 is positioned in the first terminal-post through-hole 22, and the first sealing member 71 is sleeved on the first inner-ring portion 612 of the first upper plastic member 61. In other words, the first sealing member 71 is sleeved on the first terminal-post 30, and the first sealing member 71 is clamped between the upper-cover body 11 and the first pressing ring 51. Specifically, in the thickness direction of the end cover assembly 100, at least part of the first sealing member 71 is clamped between a surface of the first pressing ring 51 facing towards the first flange 31 and the back face 112 of the upper-cover body 11. It may be understood that, the first sealing member 71 is compressed between the first pressing ring 51, the upper-cover body 11, and the first upper plastic member 61, and is configured to seal the first terminal-post through-hole 22.

Exemplarily, the second sealing member 72 is positioned in the second terminal-post through-hole 23, and the second sealing member 72 is sleeved on the second inner-ring portion 622 of the second upper plastic member 62. In other words, the second sealing member 72 is sleeved on the second terminal-post 40, and the second sealing member 72 is clamped between the upper-cover body 11 and the second pressing ring 52. Specifically, in the thickness direction of the end cover assembly 100, at least part of the second sealing member 72 is clamped between a surface of the second pressing ring 52 facing towards the second flange 41 and the back face 112 of the upper-cover body 11. It may be understood that, the second sealing member 72 is compressed between the second pressing ring 52, the upper-cover body 11, and the second upper plastic member 62, and is configured to seal the second terminal-post through-hole 23

The embodiments of the present disclosure are introduced in detail above, and specific examples are used herein to illustrate the principles and implementations of the present disclosure. The description of the embodiments is only used to facilitate understanding of the method and core ideas of the present disclosure. Additionally, for those of ordinary skill in the art, according to ideas of the present disclosure, there may be modifications in specific implementations and application scope. In conclusion, the content of this specification should not be construed as limiting the present disclosure.

## Claims

1. An end cover assembly (100) for a prismatic battery cell and comprising an upper cover (10), a lower plastic member (20), a first terminal-post (30), and a first pressing ring (51); wherein
the upper cover (10) comprises an upper-cover body (11) and a first protrusion (123), the upper-cover body (11) has a front face (111) and a back face (112) positioned facing away from the front face (111) in a thickness direction of the upper-cover body (11), the first protrusion (123) protrudes from the back face (112), the upper cover (10) defines a first mounting recess (121) and a first through-hole (12), the first mounting recess (121) is recessed towards the upper-cover body (11) from a surface of the first protrusion (123) positioned facing away from the upper-cover body (11), and the first through-hole (12) extends through a recess bottom-wall of the first mounting recess (121) and the front face (111);
the lower plastic member (20) comprises a lower-plastic-member body (21), and the lower-plastic-member body (21) has a first surface (211) and a second surface (212) positioned facing away from the first surface (211) in a thickness direction of the lower-plastic-member body (21); and the lower plastic member (20) defines a first accommodating recess (221), and the first accommodating recess (221) is recessed from the second surface (212) towards the first surface (211);
the lower plastic member (20) is positioned at one side of the back face (112) positioned facing away from the front face (111), and is stacked with and connected to the upper cover (10), at least a part of the first accommodating recess (221) is positioned in the first mounting recess (121), and the first terminal-post (30) passes through the first through-hole (12); and the first pressing ring (51) is sleeved on the first terminal-post (30) and fixedly connected to the first terminal-post (30), and at least a part of the first pressing ring (51) is positioned in the first accommodating recess (221) and fixedly connected to a recess wall of the first accommodating recess (221); and **characterised in that**
an orthographic projection of the first pressing ring (51) on the lower plastic member (20) covers an orthographic projection of the first protrusion (123) on the lower plastic member (20), in a direction perpendicular to a thickness direction of the end cover assembly (100).

2. The end cover assembly (100) of claim 1, wherein the first protrusion (123) has a first flat surface (1231) and a first inclined surface (1232) connected to the first flat surface (1231), the first flat surface (1231) is connected to a recess sidewall of the first mounting recess (121), and the first inclined surface (1232) is connected to the back face (112); and
the first inclined surface (1232) is inclined towards the first through-hole (12) with respect to a thickness direction of the upper cover (10), in a direction from the front face (111) to the back face (112).

3. The end cover assembly (100) of claim 2, wherein the first protrusion (123) has a height *H₁* ranging from 0.05 mm to 0.3 mm in the thickness direction of the upper cover (10).

4. The end cover assembly (100) of any one of claims 1 to 3, wherein the upper cover (10) further comprises a first reinforcing portion (122) protruding from the recess bottom-wall of the first mounting recess (121), and the first reinforcing portion (122) surrounds the first through-hole (12) and is connected to a recess sidewall of the first mounting recess (121).

5. The end cover assembly (100) of claim 4, wherein the first reinforcing portion (122) has a height *H₂* ranging from 0.1 mm to 0.5 mm in a thickness direction of the upper cover (10).

6. The end cover assembly (100) of claim 4, wherein the first reinforcing portion (122) has a third flat surface (1221) and a first step surface (1222) connected to the third flat surface (1221), the third flat surface (1221) is positioned at one side of the first reinforcing portion (122) positioned facing away from the recess bottom-wall of the first mounting recess (121), the third flat surface (1221) is connected to the recess sidewall of the first mounting recess (121), and the first step surface (1222) is connected to the recess bottom-wall of the first mounting recess (121);
a chamfer *R₁₁* is defined at a connection of the first step surface (1222) and the third flat surface (1221), and a chamfer *R₂₁* is defined at a connection of the first step surface (1222) and the recess bottom-wall of the first mounting recess (121); and
each of the chamfer *R₁₁* and the chamfer *R₂₁* has a radius ranging from 0.05 mm to 3 mm.

7. The end cover assembly (100) of any one of claims 1 to 3, wherein the upper cover (10) further comprises a first boss (124) protruding from the front face (111), and the first through-hole (12) further extends through the first boss (124);
the first boss (124) has a first peripheral side surface (1242), and in a direction from the back face (112) to the front face (111), the first peripheral side surface (1242) is inclined towards the first through-hole (12) with respect to a thickness direction of the upper cover (10); and
an angle between the first peripheral side surface (1242) and the thickness direction of the upper cover (10) ranges from 5° to 60°.

8. The end cover assembly (100) of any one of claims 1 to 3, wherein at least a part of the first terminal-post (30) is a polygonal prism, and a shape of the first through-hole (12) matches a shape of the first terminal-post (30); and
the first terminal-post (30) comprises a first part (301) and a second part (302), the second part (302) is connected to a surface of the first part (301), the first part (301) passes through the first through-hole (12), the first part (301) is a hexagonal prism, and the second part (302) is connected to the first pressing ring (51) compatibly.

9. The end cover assembly (100) of claim 8, wherein the first part (301) has a first top surface (3011) positioned facing towards the second part (302) and connected to the second part (302), the first part (301) further has a first face (3012), a second face (3013), a third face (3014), a fourth face (3015), a fifth face (3016), and a sixth face (3017) connected in sequence, each of the first face (3012), the second face (3013), the third face (3014), the fourth face (3015), the fifth face (3016), and the sixth face (3017) is connected to the first top surface (3011); and the first face (3012), the second face (3013), the third face (3014), the fourth face (3015), the fifth face (3016), and the sixth face (3017) are distributed symmetrically around a central axis of the first terminal-post (30); and
a chamfer *R₀₁* is defined at a connection of the first face (3012) and the second face (3013), and has a radius ranging from 0.5 mm to 5.0 mm.

10. The end cover assembly (100) of claim 9, wherein a chamfer *R₀₂* is defined at a connection of the first top surface (3011) and the first face (3012), and has a radius ranging from 0.1 mm to 1 mm.

11. The end cover assembly (100) of claim 9 or 10, wherein the first face (3012) is inclined towards a center of the first terminal-post (30), in a direction from the first part (301) to the second part (302); and
an angle of the first face (3012) with respect to a thickness direction of the upper cover (10) ranges from 0.05° to 5°.

12. The end cover assembly (100) of any one of claims 1 to 3, wherein the lower plastic member (20) further defines a first avoidance recess (223), the first avoidance recess (223) is recessed from the first surface (211) towards the second surface (212), the first avoidance recess (223) is positioned facing towards the first protrusion (123), and the first avoidance recess (223) is configured to avoid the first protrusion (123) of the upper cover (10).

13. The end cover assembly (100) of any one of claims 1 to 3, wherein the first accommodating recess (221) has a first snapped protrusion (221A) on the first surface (211), the lower plastic member (20) further comprises a first protrusion portion (222), and the first protrusion portion (222) protrudes from a surface of the first snapped protrusion (221A) positioned facing away from the first surface (211); and
the first mounting recess (121) comprises a first mounting sub-recess (1211) and a second mounting sub-recess (1212) that are arranged in a thickness direction of the upper cover (10) and are in communication with each other, the first snapped protrusion (221A) is inserted into the first mounting sub-recess (1211), and the first protrusion portion (222) is inserted into the second mounting sub-recess (1212).

14. An energy-storage apparatus (1000) comprising a housing (400) and the end cover assembly (100) of any one of claims 1 to 13, wherein the end cover assembly (100) is mounted to the housing (400) to seal an opening of the housing (400).

15. An electricity-consumption device (5000) comprising the energy-storage apparatus (1000) of claim 14, wherein the energy-storage apparatus (1000) is configured to store electrical energy.

## Patentansprüche

1. Endabdeckungsbaugruppe (100) für eine prismatische Batteriezelle und umfassend eine obere Abdeckung (10), ein unteres Kunststoffelement (20), einen ersten Anschlussstift (30) und einen ersten Pressring (51); wobei die obere Abdeckung (10) einen oberen Abdeckungskörper (11) und einen ersten Vorsprung (123) umfasst, der obere Abdeckungskörper (11) eine Vorderseite (111) und eine Rückseite (112) aufweist, die von der Vorderseite (111) in einer Dickenrichtung des oberen Abdeckungskörpers (11) weg zeigend positioniert ist, der erste Vorsprung (123) von der Rückseite (112) hervorsteht, die obere Abdeckung (10) eine erste Montageaussparung (121) und ein erstes Durchgangsloch (12) definiert, die erste Montageaussparung (121) in Richtung des oberen Abdeckungskörpers (11) von einer Oberfläche des ersten Vorsprungs (123) versenkt ist, die von dem oberen Abdeckungskörper (11) weg zeigend positioniert ist, und das erste Durchgangsloch (12) sich durch eine Aussparungsbodenwand der ersten Montageaussparung (121) und der Vorderseite (111) erstreckt;
das untere Kunststoffelement (20) einen unteren Kunststoffelementkörper (21) umfasst, und der untere Kunststoffelementkörper (21) eine erste Oberfläche (211) und eine zweite Oberfläche (212) aufweist, die von der ersten Oberfläche (211) in einer Dickenrichtung des unteren Kunststoffelementkörpers (21) weg zeigend positioniert ist; und das untere Kunststoffelement (20) eine erste Aufnahmeaussparung (221) definiert, und die erste Aufnahmeaussparung (221) von der zweiten Oberfläche (212) in Richtung der ersten Oberfläche (211) versenkt ist;
das untere Kunststoffelement (20) an einer Seite der Rückseite (112) positioniert ist, die von der Vorderseite (111) weg zeigend positioniert ist, und mit der oberen Abdeckung (10) gestapelt und verbunden ist, mindestens ein Teil der ersten Aufnahmeaussparung (221) in der ersten Montageaussparung (121) positioniert ist, und der erste Anschlussstift (30) durch das erste Durchgangsloch (12) verläuft; und der erste Pressring (51) auf den ersten Anschlussstift (30) aufgesteckt und fest mit dem ersten Anschlussstift (30) verbunden ist, und mindestens ein Teil des ersten Pressrings (51) in der ersten Aufnahmeaussparung (221) positioniert und fest mit einer Aussparungswand der ersten Aufnahmeaussparung (221) verbunden ist; **dadurch gekennzeichnet, dass**
eine orthografische Projektion des ersten Pressrings (51) auf das untere Kunststoffelement (20) eine orthografische Projektion des ersten Vorsprungs (123) auf das untere Kunststoffelement (20) in einer Richtung senkrecht zu einer Dickenrichtung der Endabdeckungsbaugruppe (100) bedeckt.

2. Endabdeckungsbaugruppe (100) nach Anspruch 1, wobei der erste Vorsprung (123) eine erste ebene Oberfläche (1231) und eine erste geneigte Oberfläche (1232) aufweist, die mit der ersten ebenen Oberfläche (1231) verbunden ist, die erste ebene Oberfläche (1231) mit einer Aussparungsseitenwand der ersten Montageaussparung (121) verbunden ist und die erste geneigte Oberfläche (1232) mit der Rückseite (112) verbunden ist; und
die erste geneigte Oberfläche (1232) in Bezug auf eine Dickenrichtung der oberen Abdeckung (10) in einer Richtung von der Vorderseite (111) zu der Rückseite (112) in Richtung des ersten Durchgangslochs (12) geneigt ist.

3. Endabdeckungsbaugruppe (100) nach Anspruch 2, wobei der erste Vorsprung (123) eine Höhe *H₁* von 0,05 mm bis 0,3 mm in Dickenrichtung der oberen Abdeckung (10) aufweist.

4. Endabdeckungsbaugruppe (100) nach einem der Ansprüche 1 bis 3, wobei die obere Abdeckung (10) ferner einen ersten Verstärkungsabschnitt (122) umfasst, der aus der Aussparungsbodenwand der ersten Montageaussparung (121) hervorsteht, und der erste Verstärkungsabschnitt (122) das erste Durchgangsloch (12) umgibt und mit einer Aussparungsseitenwand der ersten Montageaussparung (121) verbunden ist.

5. Endabdeckungsbaugruppe (100) nach Anspruch 4, wobei der erste Verstärkungsabschnitt (122) eine Höhe *H₂* von 0,1 mm bis 0,5 mm in einer Dickenrichtung der oberen Abdeckung (10) aufweist.

6. Endabdeckungsbaugruppe (100) nach Anspruch 4, wobei der erste Verstärkungsabschnitt (122) eine dritte ebene Oberfläche (1221) und eine erste Stufenfläche (1222) aufweist, die mit der dritten ebenen Oberfläche (1221) verbunden ist, die dritte ebene Oberfläche (1221) an einer Seite des ersten Verstärkungsabschnitts (122) positioniert ist, die von der Aussparungsbodenwand der ersten Montageaussparung (121) weg zeigt, die dritte ebene Oberfläche (1221) mit der Aussparungsseitenwand der ersten Montageaussparung (121) verbunden ist, und die erste Stufenfläche (1222) mit der Aussparungsbodenwand der ersten Montageaussparung (121) verbunden ist;
eine Fase *R₁₁* an einer Verbindung der ersten Stufenfläche (1222) und der dritten ebenen Oberfläche (1221) definiert ist, und eine Fase *R₂₁* an einer Verbindung der ersten Stufenfläche (1222) und der Aussparungsbodenwand der ersten Montageaussparung (121) definiert ist; und
die Fase *R₁₁* und die Fase *R₂₁* jeweils einen Radius von 0,05 mm bis 3 mm aufweisen.

7. Endabdeckungsbaugruppe (100) nach einem der Ansprüche 1 bis 3, wobei die obere Abdeckung (10) ferner einen ersten Ansatz (124) umfasst, der von der Vorderseite (111) hervorsteht, und sich das erste Durchgangsloch (12) ferner durch den ersten Ansatz (124) erstreckt;
der erste Ansatz (124) eine erste periphere Seitenfläche (1242) aufweist und die erste periphere Seitenfläche (1242) in Bezug auf eine Dickenrichtung der oberen Abdeckung (10) in Richtung des ersten Durchgangslochs (12) in einer Richtung von der Rückseite (112) zur Vorderseite (111) geneigt ist; und
ein Winkel zwischen der ersten peripheren Seitenfläche (1242) und der Dickenrichtung der oberen Abdeckung (10) von 5° bis 60° beträgt.

8. Endabdeckungsbaugruppe (100) nach einem der Ansprüche 1 bis 3, wobei mindestens ein Teil des ersten Anschlussstifts (30) ein polygonales Prisma ist und eine Form des ersten Durchgangslochs (12) einer Form des ersten Anschlussstifts (30) entspricht; und
der erste Anschlussstift (30) ein erstes Teil (301) und ein zweites Teil (302) umfasst, das zweite Teil (302) mit einer Oberfläche des ersten Teils (301) verbunden ist, das erste Teil (301) durch das erste Durchgangsloch (12) verläuft, das erste Teil (301) ein Sechskantprisma ist und das zweite Teil (302) mit dem ersten Pressring (51) kompatibel verbunden ist.

9. Endabdeckungsbaugruppe (100) nach Anspruch 8, wobei das erste Teil (301) eine erste obere Oberfläche (3011) aufweist, die zum zweiten Teil (302) zeigend positioniert ist und mit dem zweiten Teil (302) verbunden ist, wobei das erste Teil (301) ferner eine erste Fläche (3012), eine zweite Fläche (3013), eine dritte Fläche (3014), eine vierte Fläche (3015), eine fünfte Fläche (3016) und eine sechste Fläche (3017) aufweist, die in Folge verbunden sind, wobei die erste Fläche (3012), die zweite Fläche (3013), die dritte Fläche (3014), die vierte Fläche (3015), die fünfte Fläche (3016) und die sechste Fläche (3017) jeweils mit der ersten oberen Oberfläche (3011) verbunden ist; und die erste Fläche (3012), die zweite Fläche (3013), die dritte Fläche (3014), die vierte Fläche (3015), die fünfte Fläche (3016) und die sechste Fläche (3017) symmetrisch um eine Mittelachse des ersten Anschlussstifts (30) herum verteilt sind; und
eine Fase *R₀₁* an einer Verbindung der ersten Fläche (3012) und der zweiten Fläche (3013) definiert ist und einen Radius von 0,5 mm bis 5,0 mm aufweist.

10. Endabdeckungsbaugruppe (100) nach Anspruch 9, wobei eine Fase *R₀₂* an einer Verbindung der ersten oberen Oberfläche (3011) und der ersten Fläche (3012) definiert ist und einen Radius von 0,1 mm bis 1 mm aufweist.

11. Endabdeckungsbaugruppe (100) nach Anspruch 9 oder 10, wobei die erste Fläche (3012) in Richtung einer Mitte des ersten Anschlussstifts (30) in einer Richtung vom ersten Teil (301) zum zweiten Teil (302) geneigt ist; und
ein Winkel der ersten Fläche (3012) in Bezug auf eine Dickenrichtung der oberen Abdeckung (10) von 0,05° bis 5° beträgt.

12. Endabdeckungsbaugruppe (100) nach einem der Ansprüche 1 bis 3, wobei das untere Kunststoffelement (20) ferner eine erste Ausweichaussparung (223) definiert, die erste Ausweichaussparung (223) von der ersten Oberfläche (211) in Richtung der zweiten Oberfläche (212) versenkt ist, die erste Ausweichaussparung (223) in Richtung des ersten Vorsprungs (123) zeigend positioniert ist und die erste Ausweichaussparung (223) so eingerichtet ist, dass sie dem ersten Vorsprung (123) der oberen Abdeckung (10) ausweicht.

13. Endabdeckungsbaugruppe (100) nach einem der Ansprüche 1 bis 3, wobei die erste Aufnahmeaussparung (221) einen ersten eingerasteten Vorsprung (221A) an der ersten Oberfläche (211) aufweist, das untere Kunststoffelement (20) ferner einen ersten Vorsprungsabschnitt (222) umfasst und der erste Vorsprungsabschnitt (222) von einer Oberfläche des ersten eingerasteten Vorsprungs (221A) hervorsteht, die von der ersten Oberfläche (211) weg zeigt; und
die erste Montageaussparung (121) eine erste Montageteilaussparung (1211) und eine zweite Montageteilaussparung (1212) umfasst, die in einer Dickenrichtung der oberen Abdeckung (10) angeordnet sind und miteinander in Verbindung stehen, der erste eingerastete Vorsprung (221A) in die erste Montageteilaussparung (1211) eingeführt ist und der erste Vorsprungabschnitt (222) in die zweite Montageteilaussparung (1212) eingeführt ist.

14. Energiespeichereinrichtung (1000), die ein Gehäuse (400) und die Endabdeckungsbaugruppe (100) nach einem der Ansprüche 1 bis 13 umfasst, wobei die Endabdeckungsbaugruppe (100) am Gehäuse (400) montiert ist, um eine Öffnung des Gehäuses (400) abzudichten.

15. Stromverbrauchsvorrichtung (5000), welche die Energiespeichereinrichtung (1000) nach Anspruch 14 umfasst, wobei die Energiespeichereinrichtung (1000) eingerichtet ist, um elektrische Energie zu speichern.

## Revendications

1. Ensemble de couvercle d'extrémité (100) pour une cellule de batterie prismatique et comportant un couvercle supérieur (10), un organe plastique inférieur (20), une première cosse (30) et une première bague de pression (51) ; dans lequel
le couvercle supérieur (10) comporte un corps de couvercle supérieur (11) et une première saillie (123), le corps de couvercle supérieur (11) comporte une face avant (111) et une face arrière (112) positionnée en regard de la face avant (111) dans une direction d'épaisseur du corps de couvercle supérieur (11), la première saillie (123) dépasse de la face arrière (112), le couvercle supérieur (10) définit un premier évidement de montage (121) et un premier trou traversant (12), le premier évidement de montage (121) est en retrait vers le corps de couvercle supérieur (11) à partir d'une surface de la première saillie (123) positionnée en regard du corps de couvercle supérieur (11), et le premier trou traversant (12) s'étend à travers une paroi inférieure d'évidement du premier évidement de montage (121) et la face avant (111) ;
l'organe plastique inférieur (20) comporte un corps d'organe plastique inférieur (21), et le corps d'organe plastique inférieur (21) présente une première surface (211) et une deuxième surface (212) positionnées en regard de la première surface (211) dans une direction d'épaisseur du corps d'organe plastique inférieur (21) ; et l'organe plastique inférieur (20) définit un premier évidement de logement (221), et le premier évidement de logement (221) est en retrait de la deuxième surface (212) vers la première surface (211) ;
l'organe plastique inférieur (20) est positionné d'un côté de la face arrière (112) positionnée en regard de la face avant (111), et est empilé avec le et relié au couvercle supérieur (10), au moins une partie du premier évidement de logement (221) est positionnée dans le premier évidement de montage (121), et la première cosse (30) passe à travers le premier trou traversant (12) ; et la première bague de pression (51) est emmanchée sur la première cosse (30) et reliée de manière fixe à la première cosse (30), et au moins une partie de la première bague de pression (51) est positionnée dans le premier évidement de logement (221) et reliée de manière fixe à une paroi d'évidement du premier évidement de logement (221) ; et **caractérisé en ce que**
une projection orthographique de la première bague de pression (51) sur l'organe plastique inférieur (20) recouvre une projection orthographique de la première saillie (123) sur l'organe plastique inférieur (20), dans une direction perpendiculaire à une direction d'épaisseur de l'ensemble de couvercle d'extrémité (100).

2. Ensemble de couvercle d'extrémité (100) selon la revendication 1, dans lequel la première saillie (123) présente une première surface plane (1231) et une première surface inclinée (1232) reliée à la première surface plane (1231), la première surface plane (1231) est reliée à une paroi latérale d'évidement du premier évidement de montage (121), et la première surface inclinée (1232) est reliée à la face arrière (112) ; et
la première surface inclinée (1232) est inclinée vers le premier trou traversant (12) par rapport à une direction d'épaisseur du couvercle supérieur (10), dans une direction de la face avant (111) vers la face arrière (112).

3. Ensemble de couvercle d'extrémité (100) selon la revendication 2, dans lequel la première saillie (123) présente une hauteur *H₁* allant de 0,05 mm à 0,3 mm dans la direction d'épaisseur du couvercle supérieur (10).

4. Ensemble de couvercle d'extrémité (100) selon l'une quelconque des revendications 1 à 3, dans lequel le couvercle supérieur (10) comporte en outre une première partie de renfort (122) faisant saillie à partir de la paroi inférieure d'évidement du premier évidement de montage (121), et la première partie de renfort (122) entoure le premier trou traversant (12) et est reliée à une paroi latérale d'évidement du premier évidement de montage (121).

5. Ensemble de couvercle d'extrémité (100) selon la revendication 4, dans lequel la première partie de renfort (122) présente une hauteur *H₂* allant de 0,1 mm à 0,5 mm dans une direction d'épaisseur du couvercle supérieur (10).

6. Ensemble de couvercle d'extrémité (100) selon la revendication 4, dans lequel la première partie de renfort (122) présente une troisième surface plane (1221) et une première surface étagée (1222) reliée à la troisième surface plane (1221), la troisième surface plane (1221) est positionnée d'un côté de la première partie de renfort (122) positionnée en regard de la paroi inférieure d'évidement du premier évidement de montage (121), la troisième surface plane (1221) est reliée à la paroi latérale d'évidement du premier évidement de montage (121), et la première surface étagée (1222) est reliée à la paroi inférieure d'évidement du premier évidement de montage (121) ;
un chanfrein *R₁₁* est défini au niveau d'une liaison de la première surface étagée (1222) et de la troisième surface plane (1221), et un chanfrein *R₂₁* est défini au niveau d'une liaison de la première surface étagée (1222) et de la paroi inférieure d'évidement du premier évidement de montage (121) ; et
chacun du chanfrein *R₁₁* et du chanfrein *R₂₁* présente un rayon allant de 0,05 mm à 3 mm.

7. Ensemble de couvercle d'extrémité (100) selon l'une quelconque des revendications 1 à 3, dans lequel le couvercle supérieur (10) comporte en outre un premier bossage (124) faisant saillie de la face avant (111), et le premier trou traversant (12) s'étend en outre à travers le premier bossage (124) ;
le premier bossage (124) présente une première surface latérale périphérique (1242) et, dans une direction de la face arrière (112) à la face avant (111), la première surface latérale périphérique (1242) est inclinée vers le premier trou traversant (12) par rapport à une direction d'épaisseur du couvercle supérieur (10) ; et
un angle entre la première surface latérale périphérique (1242) et la direction d'épaisseur du couvercle supérieur (10) va de 5° à 60°.

8. Ensemble de couvercle d'extrémité (100) selon l'une quelconque des revendications 1 à 3, dans lequel au moins une partie de la première cosse (30) est un prisme polygonal, et une forme du premier trou traversant (12) correspond à une forme de la première cosse (30) ; et
la première cosse (30) comporte une première partie (301) et une seconde partie (302), la seconde partie (302) est reliée à une surface de la première partie (301), la première partie (301) passe à travers le premier trou traversant (12), la première partie (301) est un prisme hexagonal, et la seconde partie (302) est reliée à la première bague de pression (51) de manière compatible.

9. Ensemble de couvercle d'extrémité (100) selon la revendication 8, dans lequel la première partie (301) présente une première surface supérieure (3011) positionnée en regard de la deuxième partie (302) et reliée à la deuxième partie (302), la première partie (301) présente en outre une première face (3012), une deuxième face (3013), une troisième face (3014), une quatrième face (3015), une cinquième face (3016) et une sixième face (3017) reliées en séquence, chacune de la première face (3012), la deuxième face (3013), la troisième face (3014), la quatrième face (3015), la cinquième face (3016), et la sixième face (3017) est reliée à la première surface supérieure (3011) ; et la première face (3012), la deuxième face (3013), la troisième face (3014), la quatrième face (3015), la cinquième face (3016) et la sixième face (3017) sont réparties symétriquement autour d'un axe central de la première cosse (30) ; et
un chanfrein *R₀₁* est défini au niveau d'une liaison de la première face (3012) et de la deuxième face (3013), et présente un rayon allant de 0,5 mm à 5,0 mm.

10. Ensemble de couvercle d'extrémité (100) selon la revendication 9, dans lequel un chanfrein *R₀₂* est défini au niveau d'une liaison de la première surface supérieure (3011) et de la première face (3012), et présente un rayon allant de 0,1 mm à 1 mm.

11. Ensemble de couvercle d'extrémité (100) selon la revendication 9 ou 10, dans lequel la première face (3012) est inclinée vers un centre de la première cosse (30), dans une direction de la première partie (301) à la seconde partie (302) ; et
un angle de la première face (3012) par rapport à une direction d'épaisseur du couvercle supérieur (10) va de 0,05° à 5°.

12. Ensemble de couvercle d'extrémité (100) selon l'une quelconque des revendications 1 à 3, dans lequel l'organe plastique inférieur (20) définit en outre un premier évidement d'évitement (223), le premier évidement d'évitement (223) est en retrait de la première surface (211) vers la deuxième surface (212), le premier évidement d'évitement (223) est positionné en regard de la première saillie (123), et le premier évidement d'évitement (223) est configuré pour éviter la première saillie (123) du couvercle supérieur (10).

13. Ensemble de couvercle d'extrémité (100) selon l'une quelconque des revendications 1 à 3, dans lequel le premier évidement de logement (221) présente une première saillie encliquetée (221A) sur la première surface (211), l'organe plastique inférieur (20) comporte en outre une première partie de saillie (222), et la première partie de saillie (222) fait saillie à partir d'une surface de la première saillie encliquetée (221A) positionnée en regard de la première surface (211) ; et
le premier évidement de montage (121) comporte un premier sous-évidement de montage (1211) et un second sous-évidement de montage (1212) qui sont agencés dans une direction d'épaisseur du couvercle supérieur (10) et sont en communication l'un avec l'autre, la première saillie encliquetée (221A) est insérée dans le premier sous-évidement de montage (1211), et la première partie de saillie (222) est insérée dans le second sous-évidement de montage (1212).

14. Appareil de stockage d'énergie (1000), comportant un boîtier (400) et l'ensemble de couvercle d'extrémité (100) selon l'une quelconque des revendications 1 à 13, dans lequel l'ensemble de couvercle d'extrémité (100) est monté sur le boîtier (400) pour sceller une ouverture du boîtier (400) .

15. Dispositif de consommation d'électricité (5000), comportant l'appareil de stockage d'énergie (1000) selon la revendication 14, dans lequel l'appareil de stockage d'énergie (1000) est configuré pour stocker de l'énergie électrique.
